(19)

Europäisches Patentamt
European Patent Office
Office européen des brevets

(11) **EP 4 315 656 B1**

(12) **EUROPEAN PATENT SPECIFICATION**

(45) Date of publication and mention
of the grant of the patent:
**23.04.2025  Bulletin 2025/17**

(21) Application number: **22719583.1**

(22) Date of filing: **30.03.2022**

(51) International Patent Classification (IPC):
***H04B 7/185*** *(2006.01)*

(52) Cooperative Patent Classification (CPC):
**H04B 7/18504; H04B 7/18563; H04W 56/0045**

(86) International application number:
**PCT/EP2022/058498**

(87) International publication number:
**WO 2022/207758 (06.10.2022 Gazette 2022/40)**

(54) **METHODS, COMMUNICATIONS DEVICE AND INFRASTRUCTURE EQUIPMENT FOR A NON-TERRESTRIAL NETWORK**

VERFAHREN, KOMMUNIKATIONSVORRICHTUNG UND INFRASTRUKTURAUSRÜSTUNG FÜR EIN NICHT TERRESTRISCHES NETZWERK

PROCÉDÉS, DISPOSITIF DE COMMUNICATION ET ÉQUIPEMENT D'INFRASTRUCTURE POUR UN RÉSEAU NON TERRESTRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **31.03.2021  EP 21166488**

(43) Date of publication of application:
**07.02.2024  Bulletin 2024/06**

(73) Proprietors:
• **Sony Group Corporation**
  **Tokyo 108-0075 (JP)**
• **Sony Europe B.V.**
  **Weybridge, Surrey KT13 0XW (GB)**
  Designated Contracting States:
  **AL**

(72) Inventors:
• **BEALE, Martin Warwick**
  **Basingstoke Hampshire RG22 4SB (GB)**

• **WONG, Shin Horng**
  **Basingstoke Hampshire RG22 4SB (GB)**
• **PRIYANTO, Basuki**
  **Basingstoke Hampshire RG22 4SB (GB)**

(74) Representative: **D Young & Co LLP**
**3 Noble Street**
**London EC2V 7BQ (GB)**

(56) References cited:
**WO-A1-2020/231831**

• **MEDIATEK INC: "Physical layer control procedure in NR-NTN", vol. RAN WG1, no. Reno, Nevada, USA; 20190513 - 20190517, 2 May 2019 (2019-05-02), XP051708502, Retrieved from the Internet <URL:http://www.3gpp.org/ftp/tsg% 5Fran/WG1%5FRL1/TSGR1%5F97/Docs/R1% 2D1906467%2Ezip> [retrieved on 20190502]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND

Field of Disclosure

The present disclosure relates generally to communications devices, infrastructure equipment and methods of operating communications devices and infrastructure equipment.

The present disclosure claims the Paris Convention priority to European Patent Application Number 21166488.3.

Description of Related Art

The "background" description provided herein is for the purpose of generally presenting the context of the disclosure. Work of the presently named inventors, to the extent it is described in this background section, as well as aspects of the description which may not otherwise qualify as prior art at the time of filing, are neither expressly nor impliedly admitted as prior art against the present invention.

Third and fourth generation mobile telecommunication systems, such as those based on the third generation partnership project (3GPP) defined UMTS and Long Term Evolution (LTE) architectures, are able to support more sophisticated services than simple voice and messaging services offered by previous generations of mobile telecommunication systems. For example, with the improved radio interface and enhanced data rates provided by LTE systems, a user is able to enjoy high data rate applications such as mobile video streaming and mobile video conferencing that would previously only have been available via a fixed line data connection. The demand to deploy such networks is therefore strong and the coverage area of these networks, i.e. geographic locations where access to the networks is possible, may be expected to increase ever more rapidly.

Future wireless communications networks will therefore be expected to routinely and efficiently support communications with a wider range of devices associated with a wider range of data traffic profiles and types than current systems are optimised to support. For example, it is expected that future wireless communications networks will efficiently support communications with devices including reduced complexity devices, machine type communication (MTC) devices, high resolution video displays, virtual reality headsets and so on. Some of these different types of devices may be deployed in very large numbers, for example low complexity devices for supporting the "Internet of Things" (IoT), and may typically be associated with the transmission of relatively small amounts of data with relatively high latency tolerance.

Accordingly, there is expected to be a desire for future wireless communications networks, for example those which may be referred to as 5G or new radio (NR) system / new radio access technology (RAT) systems, as well as future iterations / releases of existing systems, to efficiently support connectivity for a wide range of devices associated with different applications and different characteristic data traffic profiles. There is similarly expected to be a desire for such connectivity to be available over a wide geographic area.

One example area of current interest in this regard includes so-called "non-terrestrial networks", or NTN for short. The 3GPP has proposed in Release 15 of the 3GPP specifications to develop technologies for providing coverage by means of one or more antennas mounted on an airborne or space-borne vehicle [1].

Non-terrestrial networks may provide service in areas that cannot be covered by terrestrial cellular networks (i.e. those where coverage is provided by means of land-based antennas), such as isolated or remote areas, on board aircraft or vessels, or may provide enhanced service in other areas. The expanded coverage that may be achieved by means of non-terrestrial networks may provide service continuity for machine-to-machine (M2M) or 'internet of things' (IoT) devices, or for passengers on board moving platforms (e.g. passenger vehicles such as aircraft, ships, high speed trains, or buses). Other benefits may arise from the use of non-terrestrial networks for providing multicast/broadcast resources for data delivery.

Although NTN networks can provide improved coverage for communications devices, particularly in remote areas, a nature of communications resulting from, for example, a decrease in an amount of time which communications devices spend in a coverage area of an NTN infrastructure equipment can create new challenges that need to be addressed.

WO 2020/231831 A1 (APPLE INC [US]), published on 19 November 2020, discusses slot offset determination for non-terrestrial networks.

SUMMARY

The present disclosure can help address or mitigate at least some of the issues discussed above.

According to one aspect, there is described a method of operating a communications device to transmit or to receive via a wireless communications network including non-terrestrial, NTN, infrastructure equipment. The communications device identifies a first in-coverage period during which the communications device can transmit signals to or receive signals from a first NTN infrastructure equipment, the first NTN infrastructure equipment being either carried by a first aerial vehicle or relayed via the first aerial vehicle to or from the first NTN infrastructure equipment as the aerial vehicle passes over the communications device. The communications device identifies a second in-coverage period during which the communications device can transmit signals to or receive signals from either the first NTN infrastructure equipment or a second NTN infrastructure equipment, the second NTN infrastructure equipment being either carried by a second aerial vehicle or the transmitted or the received signal are relayed via the second aerial vehicle to or from the second NTN infrastructure equipment as the second aerial vehicle passes over the communications device. The communications device transmits uplink data to the wireless communications network by adapting a transmission of the uplink data to include at least part of the second in-coverage period, based on a length of time required to transmit the uplink data and a start time at which the uplink data can be transmitted in the first in-coverage period with respect to an end of the first in-coverage period, or alternatively, the communications device receives downlink data from the wireless communications network by adapting a reception of the downlink data to include at least part of the second in-coverage period, having been transmitted at least partly in the second in-coverage period, based on a length of time required to receive the downlink data and a start time at which the downlink data can be received in the first in-coverage period with respect to an end of the first in-coverage period.

Example embodiments can provide a communications device, which is identifies that an uplink transmission or a downlink reception has a time duration which will exceed a time for which the communications device remains in a current in-coverage period but can be continued in a subsequent in-coverage period provided by either the same NTN infrastructure equipment or another NTN infrastructure equipment. Example embodiments can find application with repeated transmission/received of the same transport block to improve a likelihood of correct communication, which can exceed a remaining duration of an in-coverage period in which the transmission/reception is scheduled.

Respective aspects and features of the present disclosure are defined in the appended claims.

It is to be understood that both the foregoing general description and the following detailed description are exemplary, but are not restrictive, of the present technology. The described embodiments, together with further advantages, will be best understood by reference to the following detailed description taken in conjunction with the accompanying drawings.

## BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings wherein like reference numerals designate identical or corresponding parts throughout the several views, and:

Figure 1 schematically represents some aspects of an LTE-type wireless telecommunication system which may be configured to operate in accordance with certain embodiments of the present disclosure;

Figure 2 schematically represents some aspects of a new radio access technology (RAT) wireless telecommunications system which may be configured to operate in accordance with certain embodiments of the present disclosure;

Figure 3 is a schematic block diagram of an example infrastructure equipment and communications device configured in accordance with example embodiments;

Figure 4 schematically shows an example of a wireless communications system comprising an aerial vehicle and a terrestrial network which may be configured to operate in accordance with embodiments of the present disclosure;

Figure 5 is reproduced from [1], and illustrates a first example of a non-terrestrial network (NTN) featuring an access networking service based on a satellite/aerial platform with a bent pipe payload;

Figure 6 is reproduced from [1], and illustrates a second example of an NTN featuring an access networking service based on a satellite/aerial platform connected to a gNodeB;

Figure 7A schematically shows an aerial vehicle configured to generate a plurality of beams for providing coverage to a communications device in accordance with example embodiments;

Figure 7B schematically shows a plurality of aerial vehicles each configured to generate a beam for providing coverage to a communications device in accordance with example embodiments;

Figure 8 schematically shows an example of a scheduling window for a communications device in an NTN according to example embodiments;

Figure 9 schematically shows an example of a scheduling window which accounts for transition times between beams for a communications device in an NTN according to example embodiments;

Figure 10 schematically shows an example of a communications device deferring a PUSCH transmission according to example embodiments;

Figure 11 schematically shows an example of a communications device receiving DCI to defer a PUSCH transmission according to example embodiments;

Figure 12 schematically shows an example of a base station deferring scheduling a PUSCH transmission according to example embodiments;

Figure 13 schematically shows an example of a base station re-transmitting parts of an interrupted PDSCH transmission according to example embodiments;

Figure 14 schematically shows an example of a base station re-transmitting parts of an interrupted PDSCH transmission using characteristics for an in-coverage period of a first beam according to example embodiments;

Figure 15A schematically shows an example of a cut off batch in accordance with example embodiments;

Figure 15B schematically shows an example of delaying repetitions to avoid cut off in accordance with example embodiments;

Figure 15C schematically shows an example of re-transmitting repetitions to avoid cut off in accordance with example embodiments;

Figure 15D schematically shows an example of dropping a cut off batch in accordance with example embodiments;

## DETAILED DESCRIPTION OF THE EMBODIMENTS

### Long Term Evolution Advanced Radio Access Technology (4G)

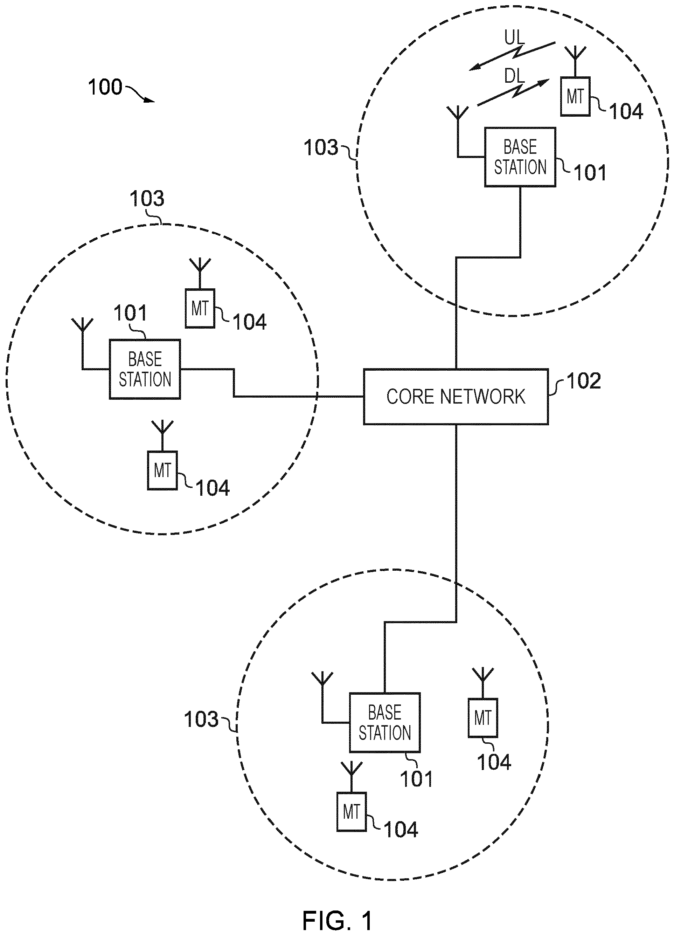

Figure 1 provides a schematic diagram illustrating some basic functionality of a mobile telecommunications network / system 100 operating generally in accordance with LTE principles, but which may also support other radio access technologies, and which may be adapted to implement embodiments of the disclosure as described herein. Various elements of Figure 1 and certain aspects of their respective modes of operation are well-known and defined in the relevant standards administered by the 3GPP (RTM) body, and also described in many books on the subject, for example, Holma H. and Toskala A [2]. It will be appreciated that operational aspects of the telecommunications networks discussed herein which are not specifically described (for example in relation to specific communication protocols and physical channels for communicating between different elements) may be implemented in accordance with any known techniques, for example according to the relevant standards and known proposed modifications and additions to the relevant standards.

The network 100 includes a plurality of base stations 101 connected to a core network part 102. Each base station provides a coverage area 103 (e.g. a cell) within which data can be communicated to and from communications devices 104. Data is transmitted from the base stations 101 to the communications devices 104 within their respective coverage areas 103 via a radio downlink. Data is transmitted from the communications devices 104 to the base stations 101 via a radio uplink. The core network part 102 routes data to and from the communications devices 104 via the respective base stations 101 and provides functions such as authentication, mobility management, charging and so on. Communications devices may also be referred to as mobile stations, user equipment (UE), user terminals, mobile radios, terminal devices, and so forth. Base stations, which are an example of network infrastructure equipment / network access nodes, may also be referred to as transceiver stations / nodeBs / e-nodeBs (eNB), g-nodeBs (gNB) and so forth. In this regard, different terminology is often associated with different generations of wireless telecommunications systems for elements providing broadly comparable functionality. However, example embodiments of the disclosure may be equally implemented in different generations of wireless telecommunications systems such as 5G or new radio as explained below, and for simplicity certain terminology may be used regardless of the underlying network architecture. That is to say, the use of a specific term in relation to certain example implementations is not intended to indicate these implementations are limited to a certain generation of network that may be most associated with that particular terminology.

### New Radio Access Technology (5G NR)

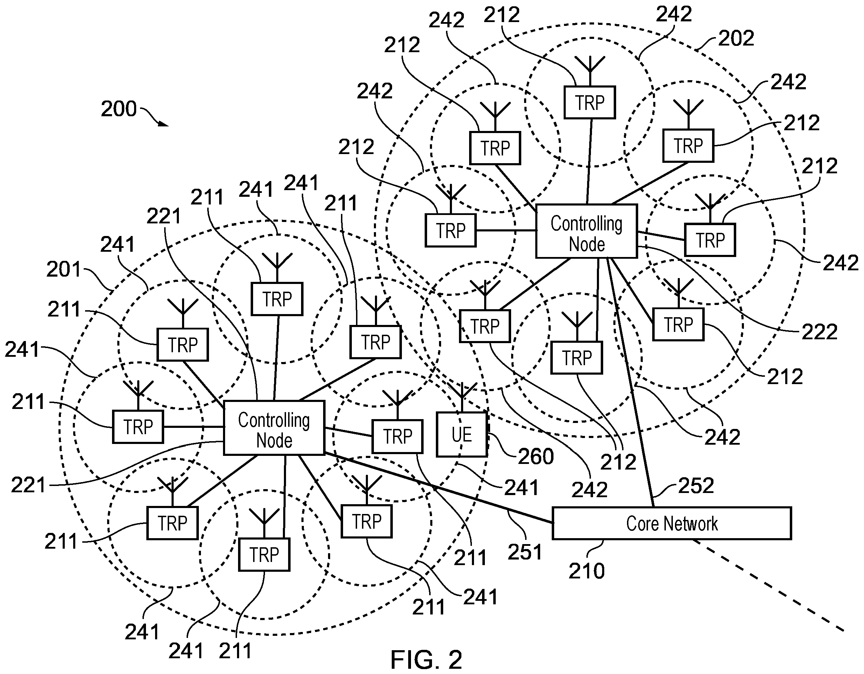

Figure 2 is a schematic diagram illustrating a network architecture for a new RAT wireless communications network / system 200 based on previously proposed approaches which may also be adapted to provide functionality in accordance with embodiments of the disclosure described herein. The new RAT network 200 represented in Figure 2 comprises a first communication cell 201 and a second communication cell 202. Each communication cell 201, 202, comprises a controlling node (centralised unit) 221, 222 in communication with a core network component 210 over a respective wired or wireless link 251, 252. The respective controlling nodes 221, 222 are also each in communication with a plurality of distributed units (radio access nodes / remote transmission and reception points (TRPs)) 211, 212 in their respective cells. Again, these communications may be over respective wired or wireless links. The distributed units (DUs) 211, 212 are responsible for providing the radio access interface for communications devices connected to the network. Each distributed unit 211, 212 has a coverage area (radio access footprint) 241, 242 where the sum of the coverage areas of the distributed units under the control of a controlling node together define the coverage of the respective communication cells 201, 202. Each distributed unit 211, 212 includes transceiver circuitry for transmission and reception of wireless signals and processor circuitry configured to control the respective distributed units 211, 212.

In terms of broad top-level functionality, the core network component 210 of the new RAT communications network represented in Figure 2 may be broadly considered to correspond with the core network 102 represented in Figure 1, and the respective controlling nodes 221, 222 and their associated distributed units / TRPs 211, 212 may be broadly considered to provide functionality corresponding to the base stations 101 of Figure 1. The term network infrastructure equipment / access node may be used to encompass these elements and more conventional base station type elements of wireless communications systems. Depending on the application at hand the responsibility for scheduling transmissions which are scheduled on the radio interface between the respective distributed units and the communications devices may lie with the controlling node / centralised unit and / or the distributed units / TRPs.

A communications device or UE 260 is represented in Figure 2 within the coverage area of the first communication cell 201. This communications device 260 may thus exchange signalling with the first controlling node 221 in the first communication cell via one of the distributed units 211 associated with the first communication cell 201. In some cases communications for a given communications device are routed through only one of the distributed units, but it will be appreciated in some other implementations communications associated with a given communications device may be routed through more than one distributed unit, for example in a soft handover scenario and other scenarios.

In the example of Figure 2, two communication cells 201, 202 and one communications device 260 are shown for simplicity, but it will of course be appreciated that in practice the system may comprise a larger number of communication cells (each supported by a respective controlling node and plurality of distributed units) serving a larger number of communications devices.

It will further be appreciated that Figure 2 represents merely one example of a proposed architecture for a new RAT communications system in which approaches in accordance with the principles described herein may be adopted, and the functionality disclosed herein may also be applied in respect of wireless communications systems having different architectures.

Thus example embodiments of the disclosure as discussed herein may be implemented in wireless telecommunication systems / networks according to various different architectures, such as the example architectures shown in Figures 1 and 2. It will thus be appreciated the specific wireless communications architecture in any given implementation is not of primary significance to the principles described herein. In this regard, example embodiments of the disclosure may be described generally in the context of communications between network infrastructure equipment / access nodes and a communications device, wherein the specific nature of the network infrastructure equipment / access node and the communications device will depend on the network infrastructure for the implementation at hand. For example, in some scenarios the network infrastructure equipment / access node may comprise a base station, such as an LTE-type base station 101 as shown in Figure 1 which is adapted to provide functionality in accordance with the principles described herein, and in other examples the network infrastructure equipment / access node may comprise a control unit / controlling node 221, 222 and / or a TRP 211, 212 of the kind shown in Figure 2 which is adapted to provide functionality in accordance with the principles described herein.

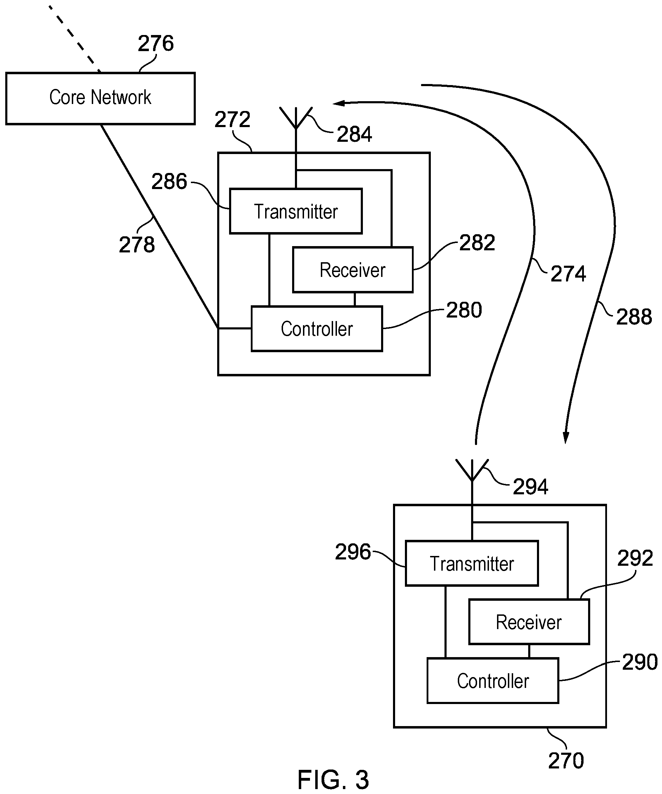

A more detailed illustration of a communications device 270 and an example network infrastructure equipment 272, which may be thought of as an eNB or a gNB 101 or a combination of a controlling node 221 and TRP 211, is presented in Figure 3. As shown in Figure 3, the communications device 270 is shown to transmit uplink data to the infrastructure equipment 272 of a wireless access interface as illustrated generally by an arrow 274. The UE 270 is shown to receive downlink data transmitted by the infrastructure equipment 272 via resources of the wireless access interface as illustrated generally by an arrow 288. As with Figures 1 and 2, the infrastructure equipment 272 is connected to a core network 276 (which may correspond to the core network 102 of Figure 1 or the core network 210 of Figure 2) via an interface 278 to a controller 280 of the infrastructure equipment 272. The infrastructure equipment 272 may additionally be connected to other similar infrastructure equipment by means of an inter-radio access network node interface, not shown on Figure 3.

The infrastructure equipment 272 includes a receiver 282 connected to an antenna 284 and a transmitter 286 connected to the antenna 284. Correspondingly, the communications device 270 includes a controller 290 connected to a receiver 292 which receives signals from an antenna 294 and a transmitter 296 also connected to the antenna 294.

The controller 280 is configured to control the infrastructure equipment 272 and may comprise processor circuitry which may in turn comprise various sub-units / sub-circuits for providing functionality as explained further herein. These sub-units may be implemented as discrete hardware elements or as appropriately configured functions of the processor circuitry. Thus the controller 280 may comprise circuitry which is suitably configured / programmed to provide the desired functionality using conventional programming / configuration techniques for equipment in wireless telecommunications systems. The transmitter 286 and the receiver 282 may comprise signal processing and radio frequency filters, amplifiers and circuitry in accordance with conventional arrangements. The transmitter 286, the receiver 282 and the controller 280 are schematically shown in Figure 3 as separate elements for ease of representation.

However, it will be appreciated that the functionality of these elements can be provided in various different ways, for example using one or more suitably programmed programmable computer(s), or one or more suitably configured application-specific integrated circuit(s) / circuitry / chip(s) / chipset(s). As will be appreciated the infrastructure equipment 272 will in general comprise various other elements associated with its operating functionality.

Correspondingly, the controller 290 of the communications device 270 is configured to control the transmitter 296 and the receiver 292 and may comprise processor circuitry which may in turn comprise various sub-units / sub-circuits for providing functionality as explained further herein. These sub-units may be implemented as discrete hardware elements or as appropriately configured functions of the processor circuitry. Thus the controller 290 may comprise circuitry which is suitably configured / programmed to provide the desired functionality using conventional programming / configuration techniques for equipment in wireless telecommunications systems. Likewise, the transmitter 296 and the receiver 292 may comprise signal processing and radio frequency filters, amplifiers and circuitry in accordance with conventional arrangements. The transmitter 296, receiver 292 and controller 290 are schematically shown in Figure 3 as separate elements for ease of representation. However, it will be appreciated that the functionality of these elements can be provided in various different ways, for example using one or more suitably programmed programmable computer(s), or one or more suitably configured application-specific integrated circuit(s) / circuitry / chip(s) / chipset(s). As will be appreciated the communications device 270 will in general comprise various other elements associated with its operating functionality, for example a power source, user interface, and so forth, but these are not shown in Figure 3 in the interests of simplicity.

The controllers 280, 290 may be configured to carry out instructions which are stored on a computer readable medium, such as a non-volatile memory. The processing steps described herein may be carried out by, for example, a microprocessor in conjunction with a random access memory, which may be non-volatile memory, operating according to instructions stored on a computer readable medium.

**Non-Terrestrial Networks (NTNs)**

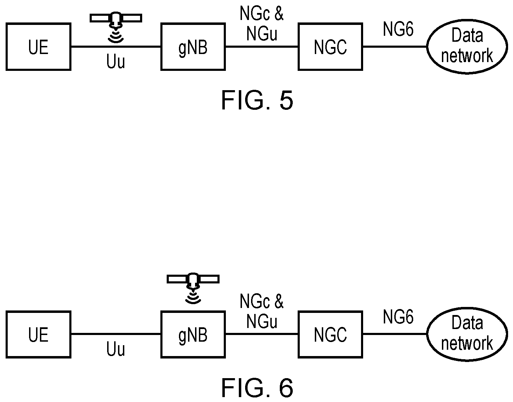

An overview of NR-NTN can be found in [1], and much of the following wording, along with Figures 5 and 6, has been reproduced from that document as a way of background.

In an NTN, an aerial vehicle (such as a satellite or aerial platform) may allow a connection of a communications device and a ground station (which may be referred to herein as an NTN gateway). In the present disclosure, the term aerial vehicle is used to refer to a space vehicle, aerial platform, or satellite, or any other entity which moves relative to a communications device and is configured to communicate with the communications device. In particular, an aerial vehicle may be in some embodiments a low earth orbit (LEO) satellite, a medium earth orbit (MEO) satellite, a high altitude platform system (HAPS), a balloon or a drone for example. As will be explained below, the aerial vehicle is configured to communicate with the communications device and the ground station of a terrestrial network by means of non-communications circuitry of the aerial vehicle.

As a result of the wide service coverage capabilities and reduced vulnerability of space/airborne vehicles to physical attacks and natural disasters, Non-Terrestrial Networks are expected to:

- foster the roll out of 5G service in un-served areas that cannot be covered by a terrestrial 5G network (isolated/remote areas, on board aircrafts or vessels) and underserved areas (e.g. suburban/rural areas) to upgrade the performance of limited terrestrial networks in a cost effective manner;

- reinforce the 5G service reliability by providing service continuity for M2M/IoT devices or for passengers on board moving platforms (e.g. passenger vehicles-aircraft, ships, high speed trains, bus) or ensuring service availability anywhere especially for critical communications, future railway/maritime/aeronautical communications; and to

- enable 5G network scalability by providing efficient multicast/broadcast resources for data delivery towards the network edges or even user terminal.

The benefits relate to either Non-Terrestrial Networks operating alone or to integrated terrestrial and Non-Terrestrial networks. They will impact at least coverage, user bandwidth, system capacity, service reliability or service availability, energy consumption and connection density. A role for Non-Terrestrial Network components in the 5G system is expected for at least the following verticals: transport, Public Safety, Media and Entertainment, eHealth, Energy, Agriculture, Finance and Automotive. It should also be noted that the same NTN benefits apply to 4G and/or LTE technologies and that while NR is sometimes referred to in the present disclosure, the teachings and techniques presented herein are equally applicable to 4G and/or LTE.

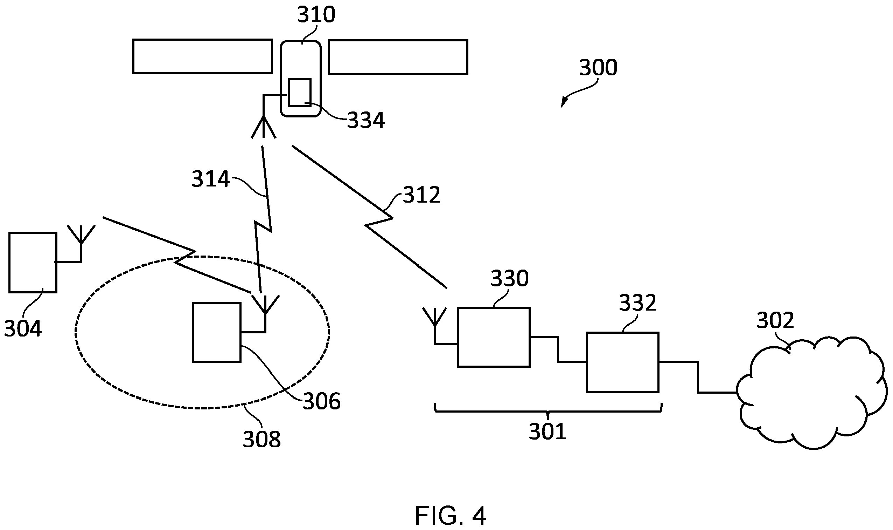

Figure 4 schematically shows an example of a wireless communications system 300 which may be configured to operate in accordance with embodiments of the present disclosure. The wireless communications system 300 in this example is based broadly around an LTE-type or NR-type architecture.

Many aspects of the operation of the wireless communications system / network 300 are known and understood and are not described here in detail in the interest of brevity. Operational aspects of the wireless communications system 300 which are not specifically described herein may be implemented in accordance with any known techniques, for example according to the current LTE-standards or the proposed NR standards.

The wireless communications system 300 comprises a core network part 302 (which may be a 4G core network or a 5G core network) in communicative connection with a radio network part. The radio network part 301 comprises a base station 332 connected to a ground station (or NTN gateway) 330. The radio network part 301 may perform the functions of a base station 101 of Figure 1, or may perform the functions of a controlling node and TRP of Figure 2. In some embodiments, the base station 332 is an example of a non-terrestrial infrastructure equipment as explained below.

An aerial vehicle 310 includes communications circuitry 334. In some embodiments, the communications circuitry 334 may be non-terrestrial infrastructure equipment which is mounted on, and/or within the aerial vehicle 310 as explained below. The communications circuitry 334 communicates via the ground station 330 with the base station 332 via a wireless communications link 312.

The communications circuitry 334 may communicate with a communications device 306, located within a cell 308, by means of a wireless access interface provided by a wireless communications link 314. For example, the cell 308 may correspond to the coverage area of a spot beam generated by the communications circuitry 334. The boundary of the cell 308 may depend on an altitude of the aerial vehicle 310 and a configuration of one or more antennas of the communications circuitry 334 by which the aerial vehicle transmits and receives signals on the wireless access interface. The spot beam may be an "earth fixed beam" which illuminates a geographic area on a surface of the earth for a pre-defined period of time. After the pre-defined period of time, the earth fixed beam may switch to serving a different geographic area on the surface of the earth. In such cases, the communications device 306 may be made aware of when the pre-defined period of time ends. In this way, the communications device 306 may determine to switch from being served by the aerial vehicle 310 to being served by another, different aerial vehicle (not shown) at the end of the pre-determined time period. Alternatively, the spot beam may be an "earth moving beam" which illuminates a constantly changing geographic area on the surface of the earth. In this case, the communications device 306 may determine to switch from being served by the aerial vehicle 310 to being served by the other aerial vehicle based on decision criteria. For example, the communications device 306 may determine to switch from being served by the aerial vehicle 310 to being served by the other aerial vehicle by determining that a distance between the communications device 306 and the aerial vehicle 310 is greater than a pre-defined distance. Alternatively, the communications device 306 may determine to switch from being served by the aerial vehicle 310 to being served by the other aerial vehicle by determining that the distance between the communications device 306 and the aerial vehicle 310 is greater than a distance between the communications device 306 and the other aerial vehicle.

The aerial vehicle 310 may be a satellite in an orbit with respect to the Earth. According to example embodiments, the satellite may be in a non-geostationary orbit (NGSO), so that the aerial vehicle 310 moves with respect to a fixed point on the Earth's surface. An example of an NGSO is an LEO, in which the satellite may complete an orbit of the Earth relatively quickly, thus providing moving cell coverage.

In Figure 4, the ground station 330 is connected to the communications circuitry 334 by means of a wireless communications link 312. The communications circuitry 334 receives signals representing downlink data transmitted by the radio access network 301 on the wireless communications link 312 and, based on the received signals, transmits signals representing the downlink data via the wireless communications link 314 providing the wireless access interface for the communications device 306. Similarly, the communications circuitry 334 receives signals representing uplink data transmitted by the communications device 306 via the wireless access interface comprising the wireless communications link 314 and transmits signals representing the uplink data to the ground station 330 on the wireless communications links 312. The wireless communications links 312, 314 may operate at a same frequency, or may operate at different frequencies.

The extent to which the communications circuitry 334 processes the received signals may depend upon a processing capability of the communications circuitry 334. For example, the communications circuitry 334 may receive signals representing the downlink data on the wireless communication link 312, amplify them and (if needed) re-modulate onto an appropriate carrier frequency for onwards transmission on the wireless access interface provided by the wireless communications link 314.

Figure 5 illustrates an example of an NTN architecture based on communications circuitry of an aerial vehicle operating in a transparent manner, meaning that a signal received from the communications device at the aerial vehicle is forwarded (to the communications device, to a ground station on Earth or to another aerial vehicle) with only frequency conversion and/or amplification. A wireless access interface (such as a 5G Uu interface) may be generated at a base station located on the Earth, and connects the base station (gNB, in the example of Figure 5) and the communications device (UE). In such embodiments, the base station may be regarded as a non-terrestrial infrastructure equipment, and communications are relayed between the non-terrestrial infrastructure equipment and the communications device 306.

Alternatively, the communications circuitry 334 of the aerial vehicle 310 may be configured to decode the signals representing the downlink data received on the wireless communication link 312 into un-encoded downlink data, re-encode the downlink data and modulate the encoded downlink data onto the appropriate carrier frequency for onwards transmission on the wireless access interface provided by the wireless communications link 314.

The communications circuitry 334 may be configured to perform some of the functionality conventionally carried out by a base station (e.g. a gNodeB or an eNode B), such as base station 101 of Figure 1. In particular, latency-sensitive functionality (such as acknowledging a receipt of the uplink data, or responding to a RACH request) may be performed by the communications circuitry 334 partially implementing some of the functions of a base station. In such embodiments, the communications circuitry 334 of the aerial vehicle 310 may be regarded as a non-terrestrial infrastructure equipment.

In such arrangements, there may be a physical (e.g. wired, or fibre optic) connection on board the aerial vehicle 310 which provides the coupling between the circuitry of the communications circuitry 334 which implements base station functionality and a transceiver of the communications circuitry 334 which is configured communicate with the communications device 306 and the ground station 330. In such arrangements, a wireless communications feeder link between the communications circuitry 334 and the ground station 330 may provide connectivity between the communications circuitry 334 and the core network part 302. In such arrangements, the base station 332 may not be present.

Figure 6 illustrates an example of an NTN architecture based on communications circuitry equipment of an aerial vehicle implementing at least some base station functionality. In this example NTN, the communications circuitry 334 is an example of non-terrestrial infrastructure equipment. The communications circuitry 334 generates the wireless access interface (e.g. the Uu interface) which connects the aerial vehicle and the communications device. For example, the communications circuitry may decode a received signal, and encode and generate a transmitted signal. As such, the non-communications circuitry may include some or all of the functionality of a base station (such as a gNodeB or eNodeB). A further connection between the communications circuitry 334 and a ground station (such as an NTN gateway) may be by means of a separate wireless access interface, and may form part of a connection between the communications circuitry 334 and a core network.

In some cases, the communications device 306 shown in Figure 4 may be configured to act as a relay node. That is, it may provide connectivity to one or more terminal devices such as the terminal device 304. When acting as a relay node, the communications device 306 transmits and receives data to and from the terminal device 304, and relays it, via the aerial vehicle 310 to the ground station 330. The communications device 306, acting as a relay node, may thus provide connectivity to the core network part 302 for terminal devices which are within a transmission range of the communications device 306.

It will be apparent to those skilled in the art that many scenarios can be envisaged in which the combination of the communications device 306 and the aerial vehicle 310 can provide enhanced service to end users. For example, the communications device 306 may be mounted on a passenger vehicle such as a bus or train, which travels through rural areas where coverage by terrestrial base stations may be limited. Terminal devices on the vehicle may obtain service via the communications device 306 acting as a relay, which communicates with the communications circuitry 334.

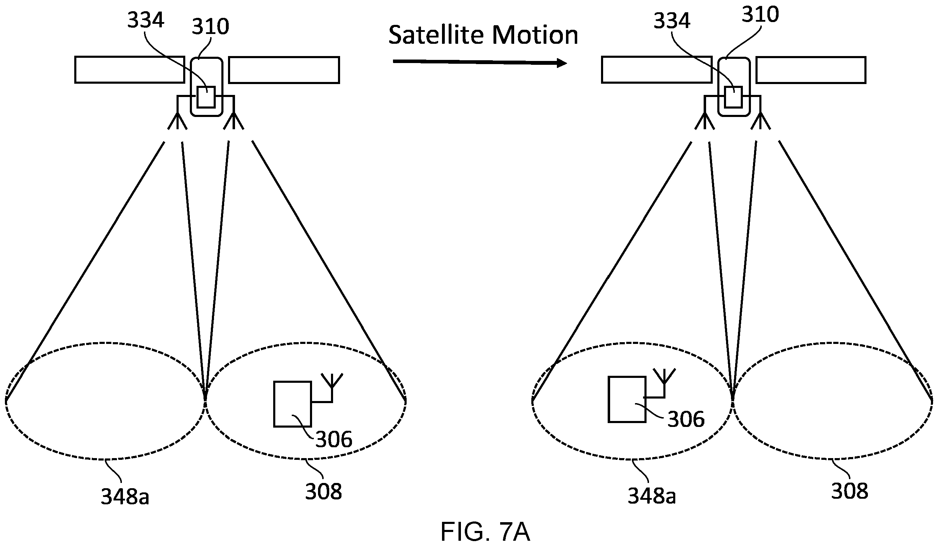

In some cases, as shown in Figure 7A, the communications circuitry 334 of the aerial vehicle 310 may comprise a plurality of antennae configured to generate a corresponding plurality of spot beams. Each of the plurality of spot beams may illuminate a different area of the Earth's surface to provide a plurality of cells 308, 348a each corresponding to a coverage area of one of the plurality of spot beams. The aerial vehicle 310 may communicate with a communications device (such as communications device 306) located in any one of the plurality of cells 308, 348a provided by the plurality of spot beams by means of a wireless access interface provided by a wireless communications link (such as wireless communications link 314) to the communications device. The boundary of each of the plurality of cells may depend on an altitude of the aerial vehicle 310 and a configuration of the plurality of antennae of the aerial vehicle 310 by which the aerial vehicle 310 transmits and receives signals on the wireless access interface. As shown in Figure 7A, the communications device 306 may move from the coverage area 308 of a first beam generated by the communications circuitry 334 carried by the aerial vehicle 310 to the coverage area 348a of a second beam generated by the communications circuitry 334 carried by the aerial vehicle 310. In other words, the communications device 306 may be handed over from the coverage area 308 of the first beam to the coverage area 348a of the second beam.

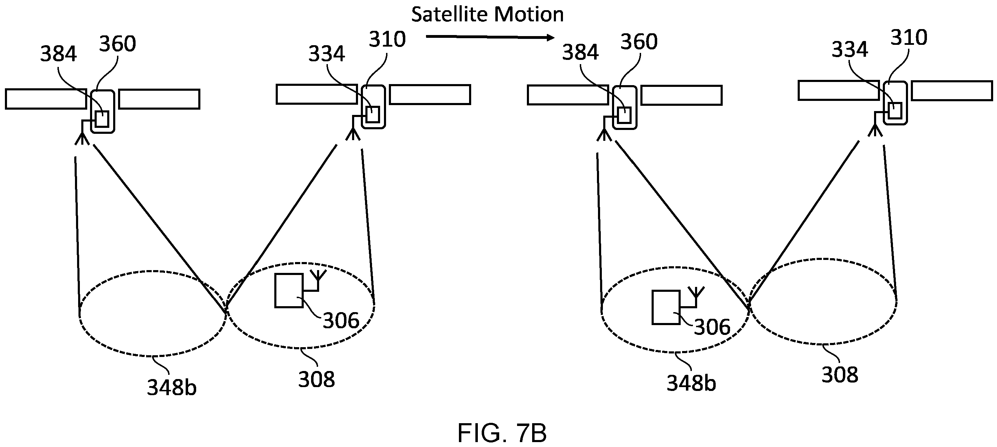

In some cases, as shown in Figure 7B, the communications device 306 may be configured to receive coverage from a plurality of aerial vehicles 310, 360 each including respective communications circuitry 334, 384. The communications circuitry 334 of a first 310 of the plurality of aerial vehicles may generate a first beam defining a coverage area 308. The communications circuitry of a second 310 of the plurality of aerial vehicles may generate a second beam defining a coverage area 348b. As shown in Figure 7B, the communications device 306 may move from the coverage area 308 of the first beam generated by the first aerial vehicle 310 to the coverage area 348b of the second beam generated by the second aerial vehicle 360. In other words, the communications device 306 may be handed over from the coverage area 308 of the first beam to the coverage area 348b of the second beam.

It will be appreciated that references to the term "beam" may be taken to mean "cell".

In such configurations, the communications device 306 may be handed over because the communications device 306 leaves the coverage area 308 of the first beam and enters the coverage area 348 of the second beam as a result of motion of the aerial vehicle (as shown in Figures 7A and 7B) and/or as a result of motion of the communications device 306 itself.

In the present disclosure, the reference numeral "348" is to be taken to mean either coverage area 348a or coverage area 348b and the phrase "second beam" is to be taken as referring to either the second beam as explained with respect to Figure 7A or Figure 7B. An "in-coverage period of the first beam" and an "in-coverage period of the second beam" are taken to mean a time period which a communications device spends in the coverage area 308 defined by the first beam and the coverage area 348 defined by the second beam respectively.

In such configurations, each of the plurality of cells has a different Physical Cell Identity (PCI). Accordingly, reference signals and scrambling codes used may be different for each of the plurality of cells, and each of the plurality of cells may be scheduled independently of each other. A handover of the communications device 306 from the coverage area 308 of the first beam to the coverage area 348 of the second beam may consist of a connected mode handover, a cell selection procedure or a cell reselection procedure. The handover procedure may be controlled by measurements made by the communications device and communicated to the base station, controlled by measurements made by the base station, controlled by declaration of radio link failure by the communications device or by other means.

There is a need to ensure that connectivity for the communications device 306 with the ground station 301 can be maintained, in light of the movement of the communications device 306, the movement of the aerial vehicle 310 (relative to the Earth's surface), or both. According to conventional cellular communications techniques, a decision to change a serving cell of the communications device 306 may be based on measurements of one or more characteristics of a radio frequency communications channel, such as signal strength measurements or signal quality measurements. In a terrestrial communications network, such measurements may effectively provide an indication that the communications device 306 is at, or approaching, an edge of a coverage region of a cell, since, for example, path loss may broadly correlate to a distance from a base station. However, such conventional measurement-based algorithms may be unsuitable for cells generated by means of the transmission of beams from communications circuitry 334 of an aerial vehicle, such as the cell 308 generated by the aerial vehicle 310.

A further challenge of conventional techniques may be the relatively high rate at which cell changes occur for the communications device 306 obtaining service from one or more aerial vehicles. For example, where the aerial vehicle 310 is an LEO satellite, the aerial vehicle 310 may complete an orbit of the Earth in around 90 minutes; the coverage of a cell generated by the aerial vehicle 310 will move very rapidly, with respect to a fixed observation point on the surface of the Earth (in one example, an LEO may move at 7.56 km/s as explained above). Similarly, it may be expected that the communications device 306 may be mounted on an airborne vehicle itself, typically having a ground speed of several hundreds of kilometres per hour. However, it will be appreciated that a speed of the aerial vehicle 310 relative to a fixed point on the Earth is generally much larger than typical speeds of airborne vehicles configured to mount the communications device 306.

**Satellite Positional Information**

One particular difficulty associated with NTNs is the large distances and relative speeds between a UE (such as communications device 306) and an eNB (such as base station 332 or a base station implemented in the communications circuitry 334) compared to terrestrial networks. For example, for an LEO, the distance between the satellite and the UE may be between 600km to 1200km. Hence, the propagation delay between the UE (hereinafter the term UE is used to refer to any communications device configured to communicate with a non-terrestrial infrastructure equipment of an NTN) and the eNB is significantly larger than for terrestrial networks, particularly in a 'transparent' arrangement such as that shown in Figure 5. For example, for an NTN using a transparent LEO satellite in a 600km high orbit, the Round Trip Time (RTT) between the UE and the eNB may be between approximately 8ms to approximately 26 ms [3].

In order to take into account this large propagation delay, uplink transmissions would need to apply a large Timing Advance (TA) and the eNB would need to take this into account for scheduling of uplink data. The timing advance that needs to be applied depends on the location of the UE within the cell footprint of the satellite. Since the cell footprint can be large, there can be a large variation of the timing advance that needs to be applied, depending on the UE location within the cell footprint.

In addition to the increased RTT between the UE and the eNB, the NTN system also needs to take into account the movement of the satellite. For example, a LEO satellite can be travelling at 7.56 km/second (27,216 km/h) relative to the UE, which would cause significant Doppler shift that the UE needs to compensate for. In order to factor in the Doppler shift, i.e. in order to apply a pre-compensation for the frequency of the uplink transmissions, the UE needs to know its own geo-location and the motion (e.g. position and velocity) of the satellite. The geo-location of the UE can, for example, be obtained from a Global Navigation Satellite System (GNSS) or from any other suitable means.

The position and velocity of the satellite can be derived from the satellite ephemeris information, that is the satellite orbital trajectory, which can be periodically broadcast to the UE, e.g. via System Information Blocks (SIBs). However, broadcasting ephemeris information, e.g. every 100ms, can lead to high signaling overhead.

Furthermore, signaling ephemeris information does not take into account perturbations in the satellite orbit and hence may not provide sufficient accuracy to determine the required timing advance and frequency compensation. In particular, satellites in LEO do not exist in a perfect vacuum and thus experience a number of factors such as varying drag coefficients or gravitational forces which perturb the orbit of the satellite. As such, as the time since a UE last received a periodic broadcast of the satellite ephemeris information increases, the accuracy with which the UE can accurately determine the position and velocity of the satellite decreases.

One possibility is that instead of sending ephemeris information, the eNB or an NTN Gateway can derive the satellite position and velocity and broadcast it via the SIBs. The satellite position and velocity may be determined by the eNB or NTN Gateway, for example, via GNSS or other suitable means. The eNB or NTN Gateway may determine the satellite position and velocity via communications on the network itself, or the eNB or NTN Gateway may determine the satellite position and velocity by other means, separate from the network. For example, the eNB or NTN Gateway may derive the satellite position and velocity, e.g. via a telemetry link to the satellite, and the eNB may transmit that information in the SIBs. The eNB/NTN Gateway may estimate satellite position and velocity at the System Frame Number (SFN) in which the SIB is broadcasted, thereby providing real time position and velocity information. Hereinafter, the term 'eNB' is used to refer to any of a base station, agNB, an eNB or an NTN gateway, unless explicitly stated otherwise.

**Time Spent in Beam Footprint**

As explained above, the large distances and relative speeds between the UE and the eNB for NTNs compared to terrestrial networks lead to technical challenges. Another associated difficulty for NTNs compared to terrestrial networks is that the UE spends a relatively short time in a coverage area of the cell compared to terrestrial networks. The time which a UE spends in the coverage area of a cell for NTNs depends on a distance between the UE and a satellite (which may or may not be co-located with the eNB as explained above), a speed of the UE relative to the satellite and a width of a spot beam generated by the satellite which provides the coverage area.

In one example, an LEO orbiting the Earth at an altitude of 600km and generating a spot beam operating at a carrier frequency of 2 GHz may have an 3dB angular beamwidth of 4.4127 degrees (corresponding to a 46 km beamwidth when the LEO is at its zenith) [3]. For a LEO moving at 7.56km/sec, the UE will be in the coverage area of the spot beam for only 6.1 seconds.

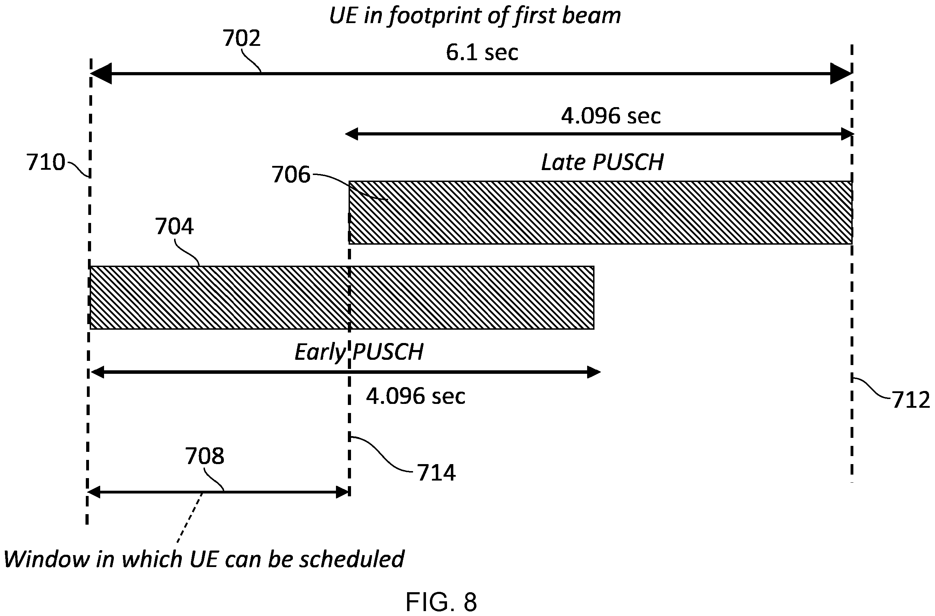

An example of difficulties which may arise from the relatively short time period which a communications device spends in a coverage area of a satellite is explained with reference to Figure 8. Figure 8 is a simplified representation of examples of scheduled communications resources in time and frequency space for transmitting uplink data from the communications device 306 to the aerial vehicle 310 while the communications device 306 is in the coverage area 308 of a beam generated by the aerial vehicle 310. As shown in Figure 8, the communications device 306 is in the coverage area 308 of the beam generated by the aerial vehicle 310 for an in-coverage period 702 of 6.1 seconds. Accordingly, a base station (which may be implemented in the aerial vehicle 310 or may be on the ground as explained above) may schedule the communications device 306 to transmit signals representing uplink data during the in-coverage period 702. In some examples, the base station may schedule the communications device 306 to transmit signals representing uplink data during the in-coverage period 702 in the form of a Physical Uplink Shared Channel (PUSCH) transmission with an associated transmission period. The transmission period of a PUSCH transmission is the time taken for a complete PUSCH transmission. In NB-IoT, the transmission period for a PUSCH transmission can be up to 4.096 seconds, where the maximum transmission period of the PUSCH can be determined by the eNB scheduler up to a maximum value supported in the NB-IoT specifications. If the transmission period for a PUSCH transmission is less than the in-coverage period 702, then the PUSCH transmission may be completely transmitted if it is scheduled to begin at any time during a scheduling window 708 of the in-coverage period 702. In Figure 8, an early PUSCH transmission 704 and a late PUSCH transmission 706 are the earliest and latest respective PUSCH transmissions which can be completely transmitted in the in-coverage period 702. A start point 710 of the in-coverage period 702 coincides with a start point of the scheduling window 708 and a start point of the early PUSCH transmission 704. An end point 712 of the in-coverage period coincides with an end point of the late PUSCH transmission 706. An end point 714 of the scheduling window 702 coincides with a start point of the late PUSCH transmission 706. It will be appreciated that, in the example provided in Figure 8, a length of the scheduling window is provided by a difference between a length of the in-coverage period 702 (6.1 seconds) and the transmission period (4.096 seconds). Accordingly, in the example provided in Figure 8, the length of the scheduling window 708 is approximately two seconds.

Accordingly, for the example provided in Figure 8, a PUSCH transmission must be scheduled to begin within the approximately two second scheduling window 708 in order to ensure complete PUSCH transmission. If a PUSCH transmission is scheduled to begin later than the scheduling window 708 then the PUSCH transmission may not be able to be completely transmitted within the in-coverage period 702.

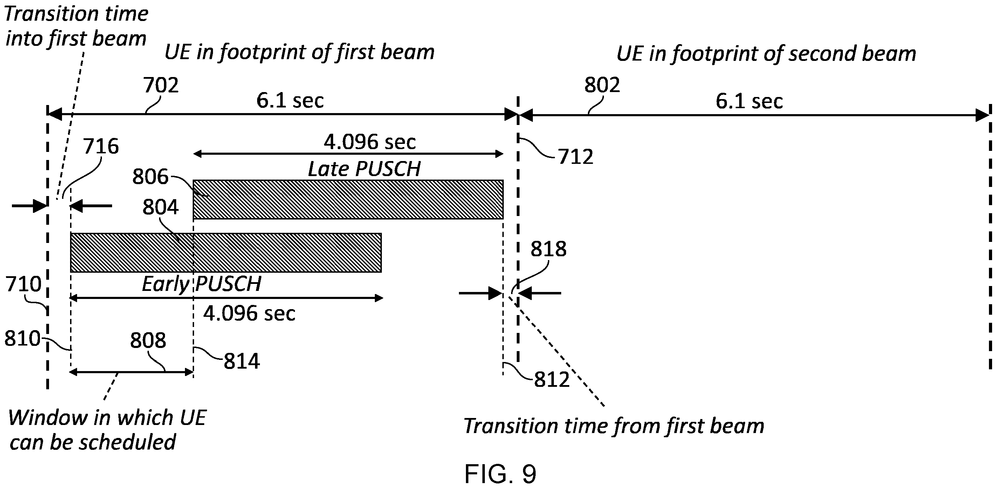

As indicated above, Figure 8 is a simplified representation of examples of scheduled communications resources in time and frequency space for transmitting uplink data from the communications device 306 to the aerial vehicle 310 while the communications device 306 is in the coverage area 308 of a beam generated by the aerial vehicle 310. Figure 9 is based on Figure 8 and additionally accounts for transition times for the communications device 306 to enter and leave the coverage area 308 of the beam. As the communications device 306 leaves the coverage area 308 of the beam, which is a first beam, it may enter a coverage area of another, second beam (such as coverage area 348). The second beam may be generated by an antenna of the aerial vehicle 310 which provides the first beam or, alternatively, by an antenna of another aerial vehicle (such as aerial vehicle 360). As will be appreciated, a portion of the in-coverage period 702 may be occupied by a time taken for the communications device to transition into the coverage area 308 of the first beam (referred to as "entering period 716") and a time taken for the communications device 306 to transition out of the coverage area 308 of the first beam (referred to as "leaving period 818").

Communications resources in the entering period 716 may be reserved for various communications processes as the communications device 306 enters the coverage area 308 of the first beam. For example, during the entering period 716, the communications device 306 may:

- Perform synchronisation to the first beam by receiving Primary Synchronisation Signals (PSSs) and/or Secondary Synchronisation Signals;
- Read System Information (SIB) in the first beam;
- Transmit Physical Random Access Channel (PRACH) and receive a Random Access Response (RAR) in the first beam.

Similarly, communications resources in the leaving period 818 may be reserved for various communications processes as the communications device 306 moves out of the coverage area of the first beam. For example, during the leaving period 818, the communications device 306 may:

- Perform neighbour cell measurements of the second beam.
- Transmit handover command signals as part of a handover procedure of the communications device 306 from the first beam to the second beam.

Since communications resources are reserved during the entering period 716 and the leaving period 818, it may not be possible to schedule signals representing uplink or downlink data to be transmitted to or from the communications device 306 respectively in the entering period 716 or the leaving period 818. For example, Figure 9 shows an early PUSCH transmission 804 and a late PUSCH transmission 806 which are the earliest and latest respective PUSCH transmissions which can be completely transmitted in the in-coverage period 702 when the entering period 716 and the leaving period 818 are accounted for. In Figure 9, a PUSCH transmission may be completely transmitted if it is scheduled to begin at any time during a scheduling window 808 of the in-coverage period 702. A start point 810 of the scheduling window 808 coincides with a start point of the early PUSCH transmission 804. An end point 814 of the scheduling window 808 coincides with a start point of the late PUSCH transmission 806. A start point of the leaving period 818 coincides with an end point of the late PUSCH transmission 812.

It will be appreciated that, in the example provided in Figure 9, a length of the scheduling window is provided by a difference between a length of the in-coverage period 702 (6.1 seconds) and the transmission period (4.096 seconds), less the entering period 716 and the leaving period 818. Accordingly, in the example provided in Figure 9, the length of the scheduling window 808 is less than the scheduling window 708 in Figure 8.

Accordingly, for the example provided in Figure 9, a PUSCH transmission must be scheduled to begin within the less than two second scheduling window 808 in order to ensure complete PUSCH transmission. If a PUSCH transmission is scheduled to begin later than the scheduling window 808 then the PUSCH transmission may not be able to be completely transmitted.

An NB-IoT transmission spanning 4.096 seconds is referred to in the present disclosure as consisting of 4096 repetitions. It will be appreciated that references to "repetitions" may consist of a mixture of resource units and actual repetitions. Although the present disclosure refers to eMTC transmissions of 4.096 seconds duration or of 4096 repetitions, it will be appreciated by one skilled in the art that this is merely an example and other durations/number of repetitions may be used. While the maximum number of eMTC transmissions in a current standard is 2048 repetitions, it will be appreciated that the following description refers to eMTC transmissions of 4.096 second duration as this acts to highlight the nature of the problem to be solved. It will further be appreciated that embodiments discussed below with respect to eMTC may be applied to NB-IoT. In NB-IoT, transmissions of duration 4.096 seconds are possible according to the current standards.

In view of the above-mentioned technical challenges, there is provided a method of operating a communications device to transmit or to receive via a wireless communications network including non-terrestrial, NTN, infrastructure equipment. The communications device identifies a first in-coverage period during which the communications device can transmit signals to or receive signals from a first NTN infrastructure equipment, the first NTN infrastructure equipment being either carried by a first aerial vehicle or relayed via the first aerial vehicle to or from the first NTN infrastructure equipment as the aerial vehicle passes over the communications device. The communications device identifies a second in-coverage period during which the communications device can transmit signals to or receive signals from either the first NTN infrastructure equipment or a second NTN infrastructure equipment, the second NTN infrastructure equipment being either carried by a second aerial vehicle or the transmitted or the received signal are relayed via the second aerial vehicle to or from the second NTN infrastructure equipment as the second aerial vehicle passes over the communications device. The communications device transmits uplink data to the wireless communications network by adapting a transmission of the uplink data to include at least part of the second in-coverage period, based on a length of time required to transmit the uplink data and a start time at which the uplink data can be transmitted in the first in-coverage period with respect to an end of the first in-coverage period, or alternatively, the communications device receives downlink data from the wireless communications network by adapting a reception of the downlink data to include at least part of the second in-coverage period, having been transmitted at least partly in the second in-coverage period, based on a length of time required to receive the downlink data and a start time at which the downlink data can be received in the first in-coverage period with respect to an end of the first in-coverage period.

**Communications Device Deferring Transmission**

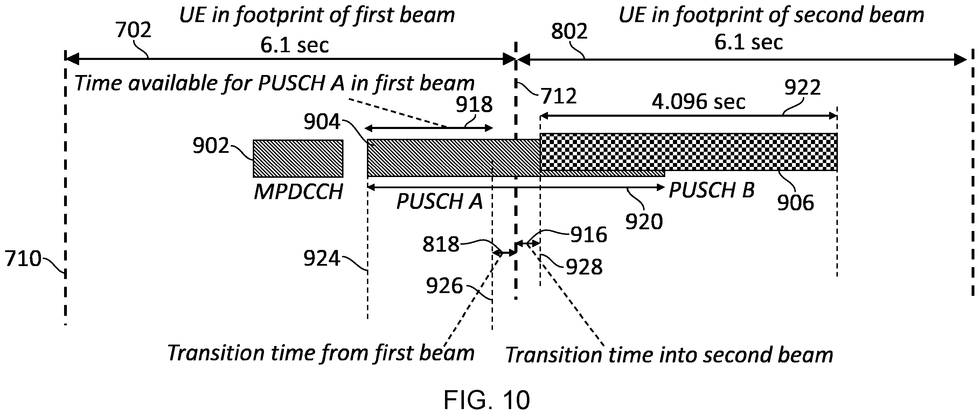

Figure 10 illustrates an example of the communications device 306 deferring an uplink transmission according to example embodiments. The communications device 306 receives an MTC PDCCH (MPDCCH) transmission 902 while in the coverage period 702 of the first beam. The MPDCCH transmission 902 informs the communications device 306 that it has been scheduled to transmit a PUSCH transmission 904. As shown in Figure 10, the scheduled PUSCH transmission 904 cannot be completely transmitted before the communications device 306 moves out of the coverage area 308 of the first beam. In other words, an available time period 918 for transmission is less than a transmission time period for the scheduled PUSCH transmission 904. As shown in Figure 10, a start point 924 of the available time period 918 coincides with a start point of the scheduled PUSCH transmission 904 and an end point 926 of the available time period 918 coincides with a start point of the leaving period 818 for the first beam. Since the available time period 918 is shorter than the transmission time period 920 for the scheduled PUSCH 904, the scheduled PUSCH cannot be completely transmitted in the in-coverage period 702 of the first beam.

The communications device 306 may determine that the scheduled PUSCH 904 cannot be completely transmitted in the in-coverage period 702 of the first beam. In response, the communications device 306 may determine to defer transmission of the scheduled PUSCH 904 until the communications device 306 is in the coverage area 348 of the second beam. In example embodiments, the communications device 306 may defer the transmission of the scheduled PUSCH 904 to begin at an end point 928 of an entering period 916 for the second beam, as shown by the deferred PUSCH 906 in Figure 10. During the entering period 916 for the second beam, the communications device 306 may prepare for transition into the coverage area 348 of the second beam by performing a synchronisation process, performing measurements and/or executing a Random Access Channel (RACH) process in the second beam for example.

In such embodiments, a length of the entering period 916 for the second beam may be known by both the communications device 306 and the base station which schedules the communications device 306. For example, the length of the entering period 916 may be represented as a number of subframes ($N_{trans}$) after a start point of the in-coverage period 802 of the second beam (which coincides with the end point of the in-coverage period 702 of the first beam in Figure 10). The value of $N_{trans}$ may be defined in specifications, signalled explicitly to the communications device 306 by the base station in Downlink Control Information (DCI) or signalled by other means. In some cases, the value of $N_{trans}$ may be a function of a coverage level of the communications device 306 in which case the communications device 306 may be aware of a mapping between the coverage level and $N_{trans}$, and use the mapping to determine the value of $N_{trans}$ based on a measured coverage level.

Such embodiments allow the communications device 306 to prepare for transmissions when it is in the coverage area 348 of the second beam and can arrange for the deferred PUSCH 906 to be transmitted as early as possible after the communications device 306 has entered the coverage area 348 of the second beam. In some embodiments, as shown in Figure 10, the communications device 306 may use the same frequency resources to transmit the deferred PUSCH 906 which were intended to be used by the scheduled PUSCH 904 (an offset in frequency space is shown between the scheduled PUSCH 904 and the deferred PUSCH 906 to improve the clarity of Figure 10, but it will be appreciated that the frequency offset is approximately zero for such embodiments).

In some embodiments, a Physical Uplink Control Channel (PUCCH) transmission may be providing HARQ-ACK feedback for a Physical Downlink Shared Channel (PDSCH) transmission when the communications device 306 is in the coverage area 308 of the first beam. In such embodiments, the communications device 306 may determine that it cannot completely transmit the scheduled PUCCH in the in-coverage period 702 of the first beam and defers transmission of the PUCCH until the in-coverage period 802 of the second beam.

In some embodiments, communications device 306 may be configured to operate with pre-configured uplink resources (PUR). In such embodiments, the communications device 306 may determine that it cannot completely transmit a PUR transmission when the communications device 306 is in the in-coverage period 702 of the first beam and defers transmission of the PUR until the in-coverage period 802 of the second beam.

It will be appreciated that embodiments discussed with reference to Figure 10 are not limited to uplink transmissions and may be applied to downlink transmissions.

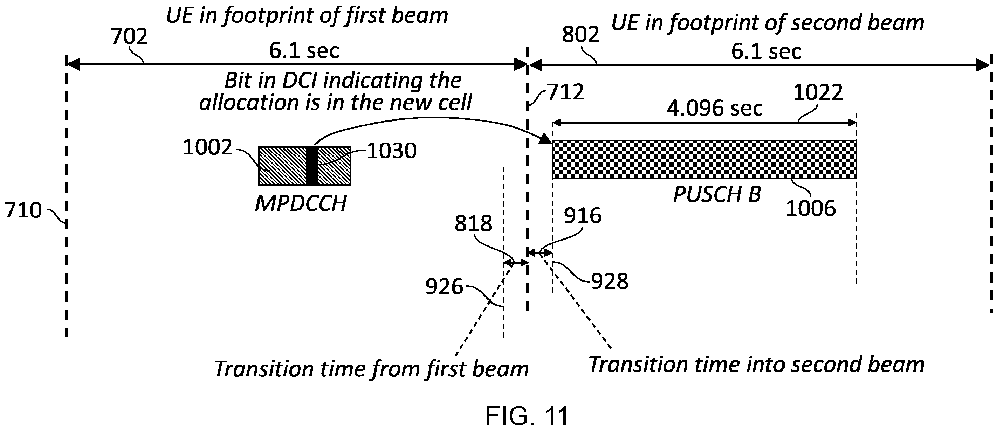

In example embodiments, as illustrated in Figure 11, the base station may explicitly signal to the communications device 306 an indication of which communications resources (time and frequency resources) it should use for a PUSCH transmission 1006 in the in-coverage period 802 of the second beam. For example, as illustrated in Figure 11, the base station may include a DCI in the MPDCCH transmission 1002 with a bit 1030 indicating which communications resources in the in-coverage period 802 of the second beam that the communications device can use to transmit the PUSCH 1006 scheduled by the MPDCCH transmission 1002.

In some embodiments, the bit 1030 in the DCI signals a time delay after the MPDCCH transmission 1002 at which the PUSCH 1006 should begin to be transmitted. If the time delay is greater than a remaining time during which the communications device 306 is located in the coverage area of the first beam, then the communications device 306 transmits the PUSCH 1006 during the in-coverage period 802 of the second beam.

**Base Station Defers Transmission**

In some embodiments, the base station may determine that there is insufficient time remaining in the in-coverage period 702 of the first beam for the communications device 306 to completely transmit signals representing data scheduled by the base station to the base station. In such embodiments, the base station may determine not to schedule the communications device 306 to transmit the signals representing the data in the in-coverage period 702 of the first beam. In such embodiments, if the same base station is configured to schedule transmissions for the communications device 306 in both the in-coverage period 702 of the first beam and the in-coverage period 802 of the second beam, then the base station may prepare for the signals representing the data to be transmitted in the in-coverage period 802 of the second beam. In other words, the base station defers the scheduling of the signals representing the data to be transmitted in the in-coverage period 802 of the second beam.

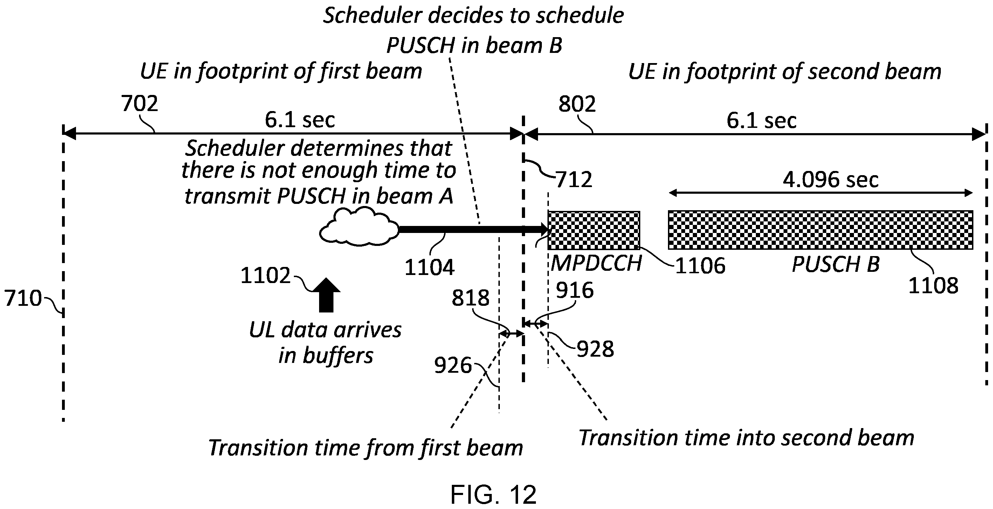

Figure 12 illustrates an example of a base station deferring uplink transmission according to example embodiments. As shown by arrow 1102, uplink data arrives in a buffer of the communications device 306. The communications device 306 then transmits, to the base station, an indication that it has uplink data to transmit to the base station. The indication that the communication device 704 has uplink data to transmit to the base station may take the form of a scheduling request or buffer status report for example. In response to receiving the indication that the communications device 306 has uplink data to transmit to the base station, the base station determines that there is insufficient time remaining in the in-coverage period 702 of the first beam for the communications device 306 to completely transmit signals representing the uplink data in the in-coverage period 702 of the first beam. In the example shown in Figure 12, the signals representing the uplink data are specifically transmitted in a PUSCH transmission. As shown by arrow 1104, the base station then defers scheduling the PUSCH transmission until the in-coverage period 802 of the second beam. In the example shown in Figure 12, the base station defers transmitting an MPDCCH 1106 until the in-coverage period 802 of the second beam. The MPDCCH 1106 schedules a PUSCH transmission 1108 for the communications device 306 in the in-coverage period 802 of the second beam. In some embodiments, as shown in Figure 12, the MPDCCH 1106 is transmitted at a time which coincides with an end point 928 of the entering period 916 for the second beam to ensure the PUSCH transmission 1108 is transmitted immediately after the communications device 306 enters the coverage area 348 of the second beam.

**Retransmitting Missed Repetitions**

The communications device 306 may receive a downlink transmission containing signals representing downlink data from the base station. In some embodiments, the communications device 306 may determine that there is insufficient time remaining in the in-coverage period 702 of the first beam for the communications device 306 to completely receive the downlink transmission. In such embodiments, the communications device 306 may store Log-Likelihood Ratios (LLRs) related to the part of the downlink transmission which was not received. For example, the communications device 306 may determine that a downlink transmission (such as a PDSCH or MPDCCH) is not received correctly if a full set of scheduled repetitions is not received at the communications device 306 when the communications device 306 moves from the coverage area 308 of the first beam to the coverage area 348 of the second beam. In response, the communications device 306 stores LLRs related to the parts of the downlink transmission which were not received correctly. By storing the LLRs related to the parts of the downlink transmission which were not received correctly, the communications device 306 is configured to receive a retransmission of the parts of the downlink transmission which were not received correctly during the in-coverage period 802 of the second beam. In a particular example, the communications device 306 may be scheduled with 512 repetitions of PDSCH when it is in the coverage area 308 of the first beam. However, only 256 repetitions of the PDSCH may have been received by the communications device 306 before the end point 712 of the in-coverage period 702 of the first beam. The communications device 306 may then store the LLRs relating to the remaining 256 repetitions of the PDSCH to be retransmitted in the in-coverage period 802 of the second beam.

In some embodiments, the communications device 306 may determine parameters (such as a number of repetitions) for transmitting the remaining parts of the downlink transmission based on parameters of the part of the downlink transmission which was received by the communications device 306. Such embodiments do not require an MPDCCH to be transmitted in the in-coverage period 802 of the second beam. For example, if a PDSCH transmission with 4096 repetitions was scheduled during the in-coverage period 702 of the first beam and only 1536 repetitions were received by the communications device 306, the communications device 306 determines that the part of the downlink transmission to be retransmitted consists of 2560 repetitions. In example embodiments, the number of repetitions for the re-transmission may take into account changes in a quality of a radio link connecting the communications device 306 and the aerial vehicle 310 between the in-coverage period 702 of the first beam and the in-coverage period 802 of the second beam. For example, if the pathloss during the in-coverage period 702 of the first beam is different to the pathloss during the in-coverage period 802 of the second beam (for example, where the first and second beams are generated by different satellites on different orbital trajectories), the number of repetitions may be scaled by the pathloss difference.

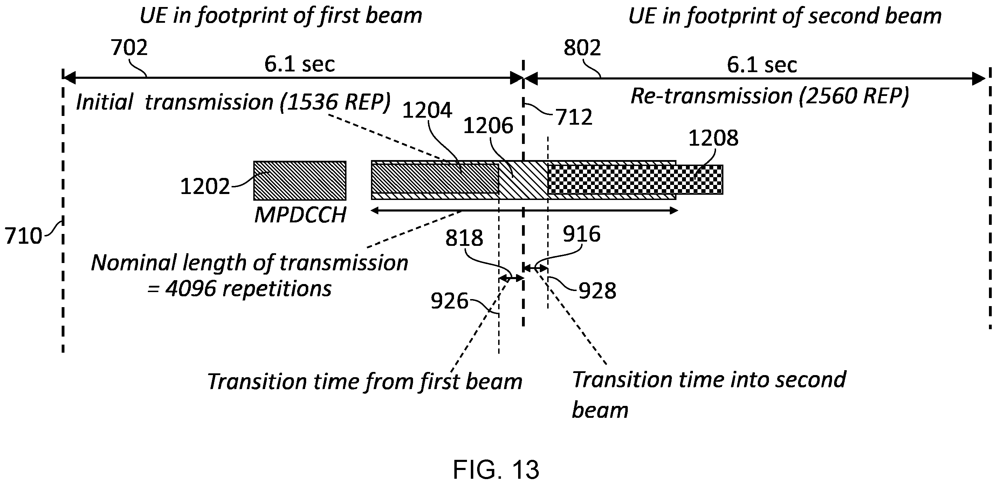

Figure 13 illustrates an example of a communications device receiving re-transmitted parts of a downlink transmission which were not correctly received according to example embodiments. As shown in Figure 13, the base station transmits an MPDDCH 1202 which schedules a PDSCH transmission 1206 for the communications device 306. As will be appreciated from Figure 13, the scheduled PDSCH transmission 1206 cannot be completely transmitted in the in-coverage period 702 of the first beam. The communications device may determine that the PDSCH transmission 1206 cannot be completely transmitted in the in-coverage period 702 of the first beam and, in response, stores LLRs related to parts 1204 of the PDSCH which were received by the communications device 306 but did not in themselves enable successful decoding of the PDSCH. The communications device 306 may use parameters of parts 1204 of the PDSCH which were correctly received, but in themselves did not enable successful decoding of the PDSCH, by the communications device 306 to determine parameters for receiving the re-transmission of the parts 1208 of the PDSCH which were not correctly received by the communications device 306. For example, the communications device 306 may determine that the scheduled PDSCH 1206 consists of 4096 repetitions and that the parts 1204 of the PDSCH which were correctly received consist of 1536 repetitions to determine that the parts 1208 of the PDSCH which were not correctly received are to be received according to a re-transmission with 2560 repetitions. Accordingly, it is not necessary for the base station to transmit another MPDCCH to schedule the re-transmission.

Although the above embodiments have been described with respect to the downlink transmission, it will be appreciated that such embodiments are equally applicable to uplink transmission. For example, the base station may store LLRs related to parts of an uplink transmission which was not correctly received at the base station during the in-coverage period 702 of the first beam, and use the stored LLRs in combination with the LLRs received from the retransmitted parts of the uplink transmission that are received during the in-coverage period 802 of the second beam in order to fully decode the uplink transmission.

In some embodiments, the parts 1208 of the scheduled PDSCH which were not correctly received by the communications device 306 may be re-scheduled by another MPDCCH to be transmitted in the in-coverage period 802 of the second beam. Specifically, the base station may transmit another MDPCCH during the coverage period 802 of the second beam to inform the communications device 306 to receive the parts 1208 of the scheduled PDSCH which were not correctly received during the coverage period 802 of the second beam. Such embodiments are particularly advantageous when the interrupted transmission (which is described as PDSCH in this example) is an uplink transmission (for example, PUSCH). This is because the base station may terminate the PUSCH early, as it may able to decode the PUSCH without the re-scheduled parts.

In some embodiments, the parts 1208 of the scheduled PDSCH which were not correctly received by the communications device 306 may be re-scheduled by another MPDCCH containing DCI to be transmitted in the in-coverage period 802 of the second beam. Specifically, the base station may transmit another MDPCCH during the coverage period 802 of the second beam to inform the communications device 306 to receive a transmission of the parts 1208 of the scheduled PDSCH which were not correctly received during the coverage period 802 of the second beam. The DCI may inform the communications device 306 to continue reception during the in-coverage period 802 of the second beam which was started during the in-coverage period 702 of the first beam. In some embodiments, the DCI may indicate that the reception during the in-coverage period 802 of the second beam should continue with different parameters than were used for the reception during the in-coverage period 702 of the first beam. For example, the DCI may indicate that a redundancy version (RV) and/or frequency resources for the reception in the in-coverage period 802 of the second beam have changed relative to an RV and/or frequency resources for the reception in the in-coverage period 702 of the first beam. Such embodiments can improve scheduling flexibility during the in-coverage period 802 of the second beam.

In some embodiments, the communications device 306 ensures that its HARQ buffers are not flushed when the communications device 306 is handed over from the first beam to the second beam. If the HARQ buffers are not flushed, then the communication device is able to combine transmissions which occur during the in-coverage period 702 of the first beam and transmissions which occur during the in-coverage period 802 of the second beam. In some embodiments, identical transport blocks are used for the transmission in the in-coverage period 702 of the first beam and for the re-transmission in the in-coverage period 802 of the second beam. In such embodiments, the same Medium Access Control (MAC) control elements are transmitted in both the in-coverage period 702 of the first beam and in the in-coverage period 802 of the second beam. It will be appreciated that MAC control elements contribute to bits that are transmitted in the transport block. Since the MAC control elements control some cell functionality (for example timing advance and power headroom reporting), the MAC control elements that were transmitted during the in-coverage period 702 of the first beam may not be applicable for the in-coverage period 802 of the second beam.

In some embodiments, the communications device 306 or base station receives the MAC control elements during the in-coverage period 802 of the second beam and determines that the received MAC control elements apply for the in-coverage period 702 of the first beam.

In some embodiments, the communications device 306 or base station may determine that some of the contents of the received MAC control elements apply for the in-coverage period 802 of the second beam. For example, MAC control elements such as timing advance (TA) may be applicable for both the in-coverage period 702 of the first beam and the in-coverage period of the second beam if the first and second beams are generated by the same satellite. As will be appreciated, the TA depends on a distance between the communication device 704 and the serving satellite, and the distance from the base station to the satellite which does not change if the communications device 306 switches from being served by the first and second beams if they are generated by the same satellite.

In some embodiments, a transport block encoded by the communications device 306 for uplink transmission is not flushed when the communication device 704 is handed over from the first beam to the second beam if the uplink transmission is not completely transmitted during the in-coverage period 702 of the first beam. Such embodiments allow the communications device 306 to use the encoded transport block to continue with the remaining part of the uplink transmission during the in-coverage period 802 of the second beam

In some embodiments, the base station may transmit DCI signals to the communication device 704 to instruct the communications to perform one of the following procedures:

- Stop transmission in the coverage area 308 of the first beam at the end of the in-coverage period 702 for the first beam and refrain from flushing HARQ buffers.
- Stop transmission in the coverage area 308 of the first beam at the end of the in-coverage period 702 for the first beam and flush HARQ buffers.
- Stop transmission in the coverage area 308 of the first beam at the end of the in-coverage period 702 for the first beam and continue the transmission during the in-coverage period 802 of the second beam.

As explained above, in some embodiments, there may be insufficient time for all of the repetitions of an uplink/downlink transmission to be completely transmitted in the in-coverage period 702 of the first beam. The repetitions which were not transmitted in the in-coverage period 702 of the first beam may be re-transmitted in the in-coverage period of the second beam. In some embodiments, the re-transmitted repetitions may be transmitted in the in-coverage period 802 of the second beam with the same characteristics which were used for the transmission in the in-coverage period 702 of the first beam. Such "characteristics" may include one or more of a scrambling code, a Demodulation Reference Signal (DMRS) sequence and $K_{offset}$. In conventional systems, the scrambling code and DMRS sequence generator are functions of cell ID and $K_{offset}$ is a timing offset that is applied in NTN systems to extend a timeline in LTE / NR timing relationships (for example, to extend the time between MPDCCH transmission and PDSCH reception).

According to example embodiments, if the number of repetitions of a downlink transmission (for example, PDSCH) is too large for the downlink transmission to be completely transmitted during the in-coverage period 702 of the first beam then the communications device 306 may receive the repetitions, which were not successfully received at the communications device 306, during the in-coverage period 802 of the second beam with the same characteristics that were used to receive the downlink transmission during the in-coverage period 702 of the first beam. In such embodiments, the base station transmits the re-transmitted repetitions during the in-coverage period 802 of the second beam with the same characteristics that were used to transmit the downlink transmission during the in-coverage period 702 of the first beam.

According to example embodiments, if the number of repetitions of an uplink transmission (for example, PUSCH) is too large for the uplink transmission to be completely transmitted during the in-coverage period 702 of the first beam then the communications device 306 may transmit the repetitions which were not successfully transmitted at the communications device 306 during the in-coverage period 802 of the second beam with the same characteristics that were used to transmit the uplink transmission during the in-coverage period 702 of the first beam. In such embodiments, the base station receives the re-transmitted repetitions during the in-coverage period 802 of the second beam with the same characteristics that were used to receive the uplink transmission during the in-coverage period 702 of the first beam.

In such embodiments, after the re-transmitted repetitions have been successfully transmitted, the base station may convert a new cell corresponding to the coverage area 348 of the second beam to operate in accordance with transmissions for the new cell. For example, the base station may reconfigure the satellite to operate in accordance with a new TA (timing advance) and/or $K_{offset}$.

In some embodiments, the re-transmitted repetitions may be transmitted in the in-coverage period 802 of the second beam with different characteristics which were used for the transmission in the in-coverage period 702 of the first beam.

In some embodiments, repetitions which span the leaving period 818 for the first beam and the entering period 916 for the second beam may be dropped.

In some embodiments, the re-transmitted repetitions are delayed during the leaving period 818 for the first beam and the entering period 916 for the second beam.

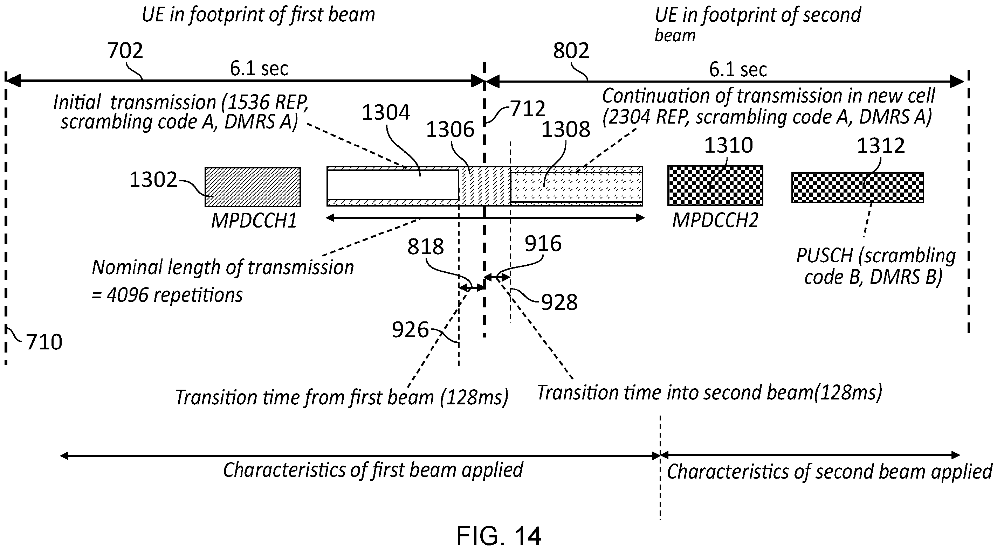

Figure 14 illustrates re-transmitted repetitions being transmitted in the in-coverage period 802 of the second beam with the same characteristics which were used for the transmission in the in-coverage period 702 of the first beam according to example embodiments. As shown in Figure 14, a first MDPCCH 1302 is transmitted by the base station to the communications device 306 which schedules a PUSCH transmission 1306 spanning 4096 repetitions. In the embodiment shown in Figure 14, the repetitions which span the leaving period 818 for the first beam and the entering period 916 for the second beam are dropped. The communications device re-transmits a part 1308 of the scheduled PUSCH transmission 1306 which was not transmitted during the in-coverage period 702 of the first beam using the same scrambling code and DMRS sequence as was used for a part 1304 of the scheduled PUSCH transmission 1306 which was transmitted during the in-coverage period 702 of the first beam. After the re-transmission 1308 is complete, the communications device 306 switches from using the scrambling code and DMRS which was used for the part 1304 of the scheduled PUSCH transmission 1306 which was transmitted during the in-coverage period 702 of the first beam to using a scrambling code and DMRS sequence for the new cell corresponding to the coverage area 348 of the second beam. The communications device 306 may then receive and decode a second MPDCCH 1310 which schedules another PUSCH 1312 which the communications device 306 transmits using the scrambling code and DMRS sequence for the new cell corresponding to the coverage area 348 of the second beam.

In the conventional systems, an RV and scrambling code are maintained for every 4 repetitions. For example if there are 16 repetitions, the 1st to 4th repetition may use one RV and scrambling code, the 5th to 8th repetitions may use another RV and another scrambling code. Such arrangements facilitate symbol combining at a receiver and cross subframe channel estimation for every batch of 4 repetitions. If the repetition is cut off during a batch (rather than at a batch boundary), a benefit of symbol combining and cross subframe channel estimation is reduced. Benefits of symbol combining can include improving a signal to noise (SNR) ratio and simplifying receiver design. Benefits of cross channel estimation can include improved robustness and/or channel estimation accuracy.

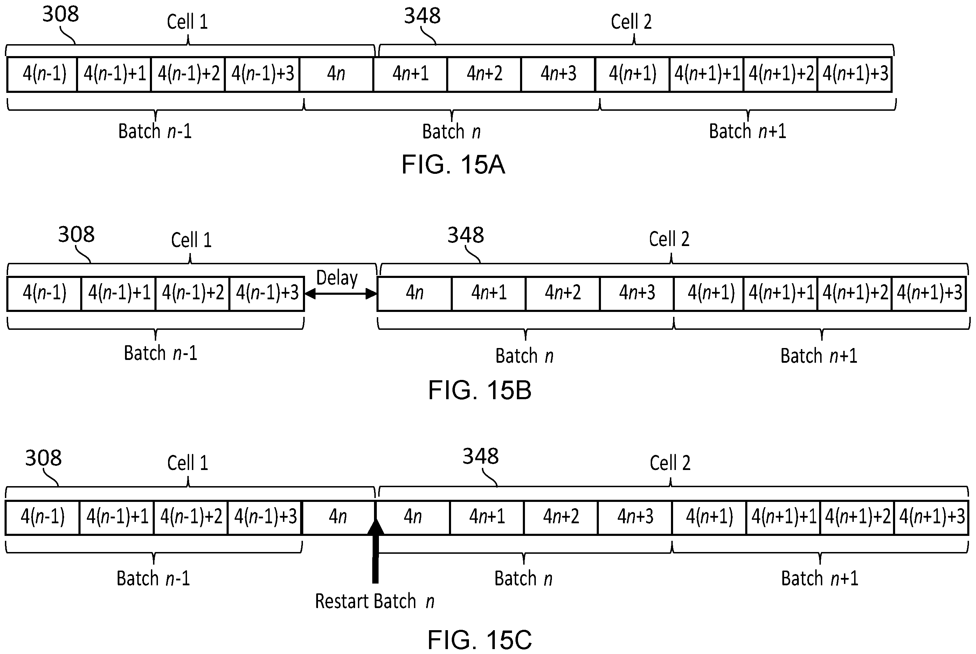

An example of a repetition being cut off during a batch is shown in Figure 15A. Figure 15A shows three batches of four repetitions, namely, Batch n-1, Batch n and Batch n+1. Each batch contains four repetitions which each share the same RV and scrambling code. The communications device 306 hands over from a first cell (which may correspond to coverage area 308 as explained above) to a second cell (which may correspond to coverage area 348 as explained above) between repetition 4n and repetition 4n+1. In other words, a repetition is cut off during the Batch n, thereby reducing the benefit of symbol combining and cross subframe channel estimation for the 4n and 4n+1 repetitions in Batch n. As the repetition is cut off during the Batch n, the Batch n may be referred to as a "cut-off batch".

In example embodiments, the "cut off" batch may be postponed. In other words, the repetition may be cut-off at a batch boundary rather than during a batch. For example, if the communications device 306 determines that a repetition is going to be cut off during a batch, the communications device 306 may delay transmission so that a new batch may be started in a new cell. For example, Figure 15B illustrates the communications device 306 delaying a transmission to avoid a repetition being cut off during a batch. As explained with reference to Figure 15A, the batch n would be cut off after repetition 4n according to conventional systems. However, Figure 14B shows that the communications device 306 delays the transmission so that the repetition 4n starts after it has handed over to the second cell 348. The cut therefore occurs at a batch boundary between Batch n-1 and Batch n.

In example embodiments, the "cut off" batch may be restarted in a new cell. In other words, the communications device 306 may continue to transmit (or receive) a batch that is cut off but restarts the transmission (or reception) of the cut off batch in the new cell. Figure 15C illustrates an example of the communications device 306 restarting a cut-off batch in a new cell. As shown in Figure 15C, batch n is due to be cut off after repetition 4n as a result of a handover of the communications device 306 from the first cell 308 to the second cell 348. In example embodiments, the communications device 306 still transmits the 4n repetition in the first cell 308 but re-transmits the 4n repetition along with the remaining repetitions of the batch n when the communications device 306 enters the second cell 348.

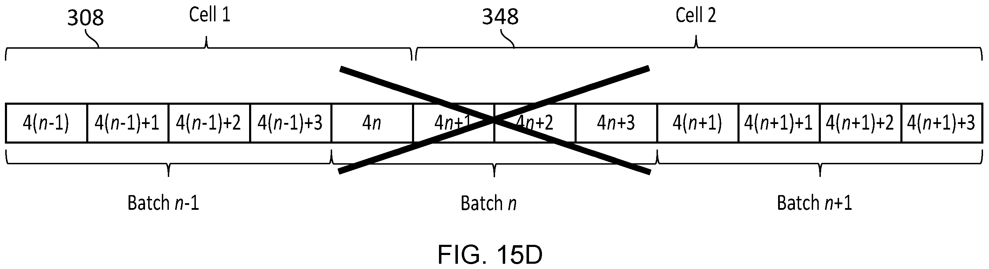

In example embodiments, the cut off batch is dropped. An example of a cut off batch being dropped is shown in Figure 15D. As shown in Figure 15D, batch n is due to be cut off after repetition 4n as a result of a handover of the communications device 306 from the first cell 308 to the second cell 348. In example embodiments, the communications device drops the batch n in response to determining that the batch n is due to be a cut off batch. Such embodiments are particularly advantageous if an end time of a transmission needs to be maintained.

The functionality of cutting off a batch may be implemented at either the communications device or the base station. For example, considering downlink transmissions, if a batch is cut-off by the base station, the base station refrains from transmitting repetitions from that batch. In this case, the communications device would not store LLRs in its buffers relating to repetitions falling within the cut-off batch. In contrast, if the batch is cut-off at the communications device, the communications device refrains from receiving repetitions from the cut-off batch. In this case, the base station scheduler may choose a number of repetitions accounting for the fact that the communications device would not receive some of the repetitions.

**Signalling to Control Communications Device during Cell Changes**

In accordance with example embodiments, when a scheduled PUSCH transmission spans the in-coverage period 702 of the first beam and the in-coverage period 802 of the second beam, then System Information Block (SIB)/ Master Information Block (MIB) signalling may be used during the in-coverage period 802 of the second beam to indicate whether PUSCH transmissions in the in-coverage period 702 of the first beam are to be continued during the in-coverage period of the second beam. In some embodiments, DCI or RRC signalling may indicate that communications device 306 stops PUSCH transmission and continues the PUSCH transmission during the in-coverage period 802 of the second beam.

In some embodiments, DCI or RRC signalling may indicate that communications device 306 stops PUSCH transmission when it changes cell (for example, at the end point 928 of the in-coverage period 702 of the first beam)

-   In accordance with example embodiments, when a scheduled PDSCH transmission spans the in-coverage period 702 of the first beam and the in-coverage period 802 of the second beam, then DCI received during the in-coverage period 702 of the first beam may indicate that PDSCH is to be transmitted during the in-coverage period 702 of the first beam and that a corresponding PUCCH is to be transmitted during the in-coverage period 802 of the second beam. In some embodiments, DCI or RRC signalling may indicate that communications device 306 stops PDSCH reception and continues the PDSCH reception during the in-coverage period 802 of the second beam. In some embodiments, DCI or RRC signalling may indicate that communications device 306 stops PDSCH reception and does not continue the reception during the in-coverage period 802 of the second beam but the communication device may, in another embodiment, be indicated to transmit the corresponding PUCCH in the second beam. In some embodiments, inter-eNB signalling may be used to continue transmission of a transport block during the in-coverage period 802 of the second beam. For example, the inter-eNB signalling may indicate:

-   The content of the transport block, including MAC control element headers.

-   The number of repetitions that had been transmitted during the in-coverage period 702 of the first beam. The new eNB can then schedule a transmission based on knowledge of how much of the energy related to the transmission has already been received by the communications device 306. In some embodiments, DCI signalling during the in-coverage period 802 in the second cell indicates that the communications device 306 should receive residual repetitions of a transmission that could not be completed during the in-coverage period 702 of the first beam.

Those skilled in the art would further appreciate that such infrastructure equipment and/or communications devices as herein defined may be further defined in accordance with the various arrangements and embodiments discussed in the preceding paragraphs. It would be further appreciated by those skilled in the art that such infrastructure equipment and communications devices as herein defined and described may form part of communications systems other than those defined by the present disclosure.

In so far as embodiments of the disclosure have been described as being implemented, at least in part, by software-controlled data processing apparatus, it will be appreciated that a non-transitory machine-readable medium carrying such software, such as an optical disk, a magnetic disk, semiconductor memory or the like, is also considered to represent an embodiment of the present disclosure.

It will be appreciated that the above description for clarity has described embodiments with reference to different functional units, circuitry and/or processors. However, it will be apparent that any suitable distribution of functionality between different functional units, circuitry and/or processors may be used without detracting from the embodiments.

Described embodiments may be implemented in any suitable form including hardware, software, firmware or any combination of these. Described embodiments may optionally be implemented at least partly as computer software running on one or more data processors and/or digital signal processors. The elements and components of any embodiment may be physically, functionally and logically implemented in any suitable way. Indeed the functionality may be implemented in a single unit, in a plurality of units or as part of other functional units. As such, the disclosed embodiments may be implemented in a single unit or may be physically and functionally distributed between different units, circuitry and/or processors.

Although the present disclosure has been described in connection with some embodiments, it is not intended to be limited to the specific form set forth herein. Additionally, although a feature may appear to be described in connection with particular embodiments, one skilled in the art would recognise that various features of the described embodiments may be combined in any manner suitable to implement the technique.

**REFERENCES**

[1] TR 38.811, "Study on New Radio (NR) to support non terrestrial networks (Release 15)", 3rd Generation Partnership Project, December 2017.
[2] Holma H. and Toskala A, "LTE for UMTS OFDMA and SC-FDMA based radio access", John Wiley and Sons, 2009.
[3] TR 38.821, "Solutions for NR to support non-terrestrial networks (NTN) (Release 16)," 3rd Generation Partnership Project.

**Claims**

1. A method of operating a communications device (306) to transmit or to receive via a wireless communications network, which includes non-terrestrial, NTN, infrastructure equipment, the method comprising:

identifying, by the communications device, a first in-coverage period during which the communications device can transmit signals to or receive signals from a first NTN infrastructure equipment, the first NTN infrastructure equipment being either carried by a first aerial vehicle (310) or the transmitted or the received signals are relayed via the first aerial vehicle to or from the first NTN infrastructure equipment, as the first aerial vehicle passes over the communications device,
identifying, by the communications device, a second in-coverage period during which the communications device can transmit signals to or receive signals from either the first NTN infrastructure equipment or a second NTN infrastructure equipment, the second NTN infrastructure equipment being either carried by a second aerial vehicle (360) or the transmitted or the received signals are relayed via the second aerial vehicle to or from the second NTN infrastructure equipment as the second aerial vehicle passes over the communications device, and either
transmitting uplink data to the wireless communications network by adapting a transmission of the uplink data to include at least part of the second in-coverage period, based on a length of time required to transmit the uplink data and a start time at which the uplink data can be transmitted in the first in-coverage period with respect to an end of the first in-coverage period, or
receiving downlink data from the wireless communications network by adapting a reception of the downlink data to include at least part of the second in-coverage period, having been transmitted at least partly in the second in-coverage period, based on a length of time required to receive the downlink data and a start time at which the downlink data can be received in the first in-coverage period with respect to an end of the first in-coverage period.

2. A method according to claim 1, wherein the adapting the transmission of the uplink data to include at least part of the second in-coverage period comprises

identifying that the start time at which the uplink data can be transmitted is during the first in-coverage period, and either
transmitting the uplink data in part of the first in-coverage period and the at least part of the second in-coverage period, or
deferring the transmission of the uplink data to start in the at least part of the second in-coverage period.

3. A method according to claim 2, wherein the identifying that the start time at which the uplink data can be transmitted during the first in-coverage period comprises
scheduling the transmission of the uplink data during the first in-coverage period.

4. A method according to claim 2, wherein the scheduling the transmission of the uplink data during the first in-coverage period comprises
receiving downlink control information from the wireless communications network scheduling the transmission of the uplink data, the downlink control information being received during the first in-coverage period.

5. A method according to claim 4, wherein the downlink control information received in the first in-coverage period identifies time and frequency resources of the at least part of the second in-coverage period.

6. A method according to claims 4, wherein the scheduling the transmission of the uplink data during the first in-coverage period comprises

detecting, by transceiver circuitry of the communications device, the presence of the uplink data in an input buffer for transmission by the communications device,
transmitting an indication of a status of the buffer to the wireless communications network, and in response, receiving the downlink control information scheduling the transmission of the uplink data.

7. A method according to claim 3, wherein the transmitting the uplink data comprises
transmitting the uplink data as a plurality of repetitions of a redundant version of a transport block, the number of the plurality of repetitions of the transport block determining the length of time required for transmitting the uplink data, a number of the plurality of the redundant versions being transmitted in the first in-coverage period and a second number of the redundant versions being transmitted in the second in-coverage period.

8. A method according to any of claims 1, wherein the transmitting the uplink data comprises

transmitting the uplink data as a plurality of repetitions of a redundant version of a transport block, the number of the plurality of repetitions of the transport block determining the length of time required for transmitting the uplink data, and the downlink control information indicating a number of the plurality of the redundant versions to be transmitted in the first in-coverage period, and the method comprises

determining a second number of the redundant versions to be transmitted in the second in-coverage period.

9. A method according to claim 8, wherein the determining the second number of the redundant versions to be transmitted in the second in-coverage period, comprises determining a remaining number of redundant versions after the first number of redundant versions have been transmitted from the start time at which the uplink data can be transmitted in the first in-coverage period.

10. A method according to claim 8, wherein the determining the second number of the redundant versions to be transmitted in the second in-coverage period, comprises receiving second downlink control information indicating the second number of redundant versions.

11. A method according to claim 8, wherein the transmitting the uplink data comprises
transmitting a first number of the repetitions of redundant versions of the uplink data in the first in-coverage period from the start time to a switching period between the first in-coverage period to the second in coverage period and a second number of the repetitions of redundant versions of the uplink data from the switching period in the second in-coverage period.

12. A method according to claim 1, wherein the transmitting the uplink data comprises
transmitting the uplink data in at least part of the second in-coverage period in accordance with medium access control elements which were received from the wireless access interface for transmitting the uplink data in the first in-coverage period.

13. A method of operating a non-terrestrial network, NTN, infrastructure equipment of a wireless communications network for transmitting data to or receiving data from one or more communications devices, the method comprising:

scheduling, by the NTN infrastructure equipment, a communications device (306) during a first in-coverage period to transmit signals to or receive signals from the NTN infrastructure equipment, the NTN infrastructure equipment being either carried by an aerial vehicle or the transmitted or the received signals are relayed via the aerial vehicle to or from the NTN infrastructure equipment as the aerial vehicle passes over the communications device, and either
receiving uplink data by adapting a reception of the uplink data to include at least part of a second in-coverage period, based on a length of time required to transmit the uplink data and a start time at which the uplink data can be transmitted in the first in-coverage period with respect to an end of the first in-coverage period, the second in-coverage period being a period during which the communications device can transmit signals to or receive signals from the NTN infrastructure equipment, or
transmitting downlink data from the wireless communications network to the communications device by adapting a transmission of the downlink data to include at least part of the second in-coverage period, having been transmitted at least partly in the second in-coverage period, based on a length of time required to transmit the downlink data and a start time at which the downlink data can be transmitted in the first in-coverage period with respect to an end of the first in-coverage period.

14. A communications device (306) for transmitting or receiving via a wireless communications network, the wireless communications network including non-terrestrial, NTN, infrastructure equipment, the communications device comprising

transceiver circuitry configured to transmit signals to or receive signals from the NTN infrastructure equipment, and
controller circuitry configured
to identify a first in-coverage period during which the communications device can transmit signals to or receive signals from a first NTN infrastructure equipment, the first NTN infrastructure equipment being either carried by a first aerial vehicle (310) or the transmitted or the received signals are relayed via the first aerial vehicle to or from the first NTN infrastructure equipment, as the first aerial vehicle passes over the communications device,
to identify a second in-coverage period during which the communications device can transmit signals to or receive signals from either the first NTN infrastructure equipment or a second NTN infrastructure equipment, the second NTN infrastructure equipment being either carried by a second aerial vehicle (360) or the transmitted or the received signals are relayed via the second aerial vehicle to or from the second NTN infrastructure equipment as the second aerial vehicle passes over the communications device, and either
to control the transceiver circuitry to transmit uplink data to the wireless communications network by adapting a transmission of the uplink data to include at least part of the second in-coverage period, based on a length of time required to transmit the uplink data and a start time at which the uplink data can be transmitted in the first in-coverage period with respect to an end of the first in-coverage period, or
to control the transceiver circuitry to receive downlink data from the wireless communications network by adapting a reception of the downlink data to include at least part of the second in-coverage period, having been transmitted at least partly in the second in-coverage period, based on a length of time required to receive the downlink data and a start time at which the downlink data can be received in the first in-coverage period with respect to an end of the first in-coverage period.

15. A non-terrestrial network, NTN, infrastructure equipment for forming part of a wireless communications network for transmitting data to or receiving data from one or more communications devices, the NTN infrastructure equipment comprising:

transceiver circuitry configured to transmit signals to or receive signals from the one or more communications devices, and
controller circuitry configured
to schedule a communications device (306) during a first in-coverage period to transmit signals to or receive signals from the NTN infrastructure equipment, the NTN infrastructure equipment being either carried by an aerial vehicle or the transmitted or the received signals are relayed via the aerial vehicle to or from the NTN infrastructure equipment as the aerial vehicle passes over the communications device, and either
to control the transceiver circuitry to receive uplink data by adapting a reception of the uplink data to include at least part of a second in-coverage period, based on a length of time required to transmit the uplink data and a start time at which the uplink data can be transmitted in the first in-coverage period with respect to an end of the first in-coverage period, the second in-coverage period being a period during which the communications device can transmit signals to or receive signals from the NTN infrastructure equipment, or
to control the transceiver circuitry to transmit downlink data from the wireless communications network to the communications device by adapting a transmission of the downlink data to include at least part of the second in-coverage period, having been transmitted at least partly in the second in-coverage period, based on a length of time required to transmit the downlink data and a start time at which the downlink data can be transmitted in the first in-coverage period with respect to an end of the first in-coverage period.

**Patentansprüche**

1. Verfahren zum Betreiben einer Kommunikationsvorrichtung (306), um über ein drahtloses Kommunikationsnetzwerk, das eine nicht-terrestrische Infrastrukturausrüstung, NTN-Infrastrukturausrüstung, einschließt, zu übertragen oder zu empfangen, das Verfahren umfassend:

   Identifizieren, durch die Kommunikationsvorrichtung, eines ersten Abdeckungszeitraums, währenddessen die Kommunikationsvorrichtung Signale an eine erste NTN-Infrastrukturausrüstung übertragen oder von dieser empfangen kann, wobei die erste NTN-Infrastrukturausrüstung entweder durch ein erstes Luftfahrzeug (310) getragen wird oder die übertragenen oder empfangenen Signale über das erste Luftfahrzeug an die erste NTN-Infrastrukturausrüstung oder von dieser weitergeleitet werden, wenn das erste Luftfahrzeug die Kommunikationsvorrichtung überfliegt,
   Identifizieren, durch die Kommunikationsvorrichtung, eines zweiten Abdeckungszeitraums, währenddessen das Kommunikationsvorrichtung Signale an die erste NTN-Infrastrukturausrüstung oder eine zweite NTN-Infrastrukturausrüstung übertragen oder von dieser empfangen kann, wobei die zweite NTN-Infrastrukturausrüstung entweder durch ein zweites Luftfahrzeug (360) getragen wird oder die übertragenen oder empfangenen Signale über das zweite Luftfahrzeug an die zweite oder NTN-Infrastrukturausrüstung oder von dieser weitergeleitet werden, wenn das zweite Luftfahrzeug die Kommunikationsvorrichtung überfliegt, und entweder
   Übertragen der Uplink-Daten an das drahtlose Kommunikationsnetzwerk durch Anpassen einer Übertragung der Uplink-Daten, um mindestens einen Teil des zweiten Abdeckungszeitraums einzuschließen, basierend auf einer Zeitdauer, die erforderlich ist, um die Uplink-Daten zu übertragen, und einer Startzeit, zu der die Uplink-Daten in dem ersten Abdeckungszeitraum in Bezug auf ein Ende des ersten Abdeckungszeitraums übertragen werden können, oder
   Empfangen von Downlink-Daten von dem drahtlosen Kommunikationsnetzwerk durch Anpassen eines Empfangs der Downlink-Daten, um mindestens einen Teil des zweiten Abdeckungszeitraums einzuschließen, wobei diese mindestens teilweise in dem zweiten Abdeckungszeitraum übertragen wurden, basierend auf einer Zeitdauer, die erforderlich ist, um die Downlink-Daten zu empfangen, und einer Startzeit, zu der die Downlink-Daten in dem ersten Abdeckungszeitraum in Bezug auf ein Ende des ersten Abdeckungszeitraums empfangen werden können.

2. Verfahren nach Anspruch 1, wobei das Anpassen der Übertragung der Uplink-Daten, um mindestens einen Teil des zweiten Abdeckungszeitraums einzuschließen, umfasst

   Identifizieren, dass die Startzeit, zu der die Uplink-Daten übertragen werden können, während des ersten Abdeckungszeitraums liegt, und entweder
   Übertragen der Uplink-Daten in einem Teil des ersten Abdeckungszeitraums und mindestens des Teils des zweiten Abdeckungszeitraums, oder
   Verzögern der Übertragung der Uplink-Daten, sodass sie mindestens in dem Teil des zweiten Abdeckungszeitraums beginnt.

3. Verfahren nach Anspruch 2, wobei das Identifizieren der Startzeit, zu der die Uplink-Daten während des ersten Abdeckungszeitraums übertragen werden können, umfasst
   Planen der Übertragung der Uplink-Daten während des ersten Abdeckungszeitraums.

4. Verfahren nach Anspruch 2, wobei das Planen der Übertragung der Uplink-Daten während der ersten Abdeckungsperiode umfasst
   Empfangen von Downlink-Steuerinformationen von dem drahtlosen Kommunikationsnetzwerk, das die Übertragung der Uplink-Daten plant, wobei die Downlink-Steuerinformationen während des ersten Abdeckungszeitraums empfangen werden.

5. Verfahren nach Anspruch 4, wobei die Downlink-Steuerinformationen, die in dem ersten Abdeckungszeitraum empfangen werden, Zeit- und Frequenzressourcen des mindestens einen Teils des zweiten Abdeckungszeitraums identifizieren.

6. Verfahren nach Anspruch 4, wobei das Planen der Übertragung der Uplink-Daten während des ersten Abdeckungszeitraums umfasst

   Erkennen, durch die Transceiver-Schaltlogik der Kommunikationsvorrichtung, des Vorhandenseins der Uplink-Daten in einem Eingabepuffer für die Übertragung durch die Kommunikationsvorrichtung,
   Übertragen einer Anzeige eines Status des Puffers an das drahtlose Kommunikationsnetzwerk und
   als Reaktion darauf, Empfangen der Downlink-Steuerinformationen, die die Übertragung der Uplink-Daten planen.

**7.** Verfahren nach Anspruch 3, wobei das Übertragen der Uplink-Daten umfasst
Übertragen der Uplink-Daten als eine Vielzahl von Wiederholungen einer redundanten Version eines Transportblocks, wobei die Anzahl der Vielzahl von Wiederholungen des Transportblocks die Zeitdauer, die zum Übertragen der Uplink-Daten erforderlich ist, bestimmt, wobei eine Anzahl der Vielzahl der redundanten Versionen in dem ersten Abdeckungszeitraum und eine zweite Anzahl der redundanten Versionen in dem zweiten Abdeckungszeitraum übertragen werden.

**8.** Verfahren nach Anspruch 1, wobei das Übertragen der Uplink-Daten umfasst

Übertragen der Uplink-Daten als eine Vielzahl von Wiederholungen einer redundanten Version eines Transportblocks, wobei die Anzahl der Vielzahl von Wiederholungen des Transportblocks die Zeitdauer, die zum Übertragen der Uplink-Daten erforderlich ist, bestimmt, und die Downlink-Steuerinformationen eine Anzahl der Vielzahl der redundanten Versionen anzeigen, die in der ersten Abdeckungsperiode zu übertragen sind, und das Verfahren umfasst Bestimmen einer zweiten Anzahl der redundanten Versionen, die in dem zweiten Abdeckungszeitraum zu übertragen sind.

**9.** Verfahren nach Anspruch 8, wobei das Bestimmen der zweiten Anzahl der redundanten Versionen, die in dem zweiten Abdeckungszeitraum zu übertragen sind, das Bestimmen einer verbleibenden Anzahl redundanter Versionen umfasst, nachdem die erste Anzahl von redundanten Versionen ab dem Startzeitpunkt übertragen wurde, zu dem die Uplink-Daten in dem ersten Abdeckungszeitraum übertragen werden können.

**10.** Verfahren nach Anspruch 8, wobei das Bestimmen der zweiten Anzahl der redundanten Versionen, die in dem zweiten Abdeckungszeitraum zu übertragen sind, umfasst
Empfangen von zweiten Downlink-Steuerinformationen, die die zweite Anzahl von redundanten Versionen angeben.

**11.** Verfahren nach Anspruch 8, wobei das Übertragen der Uplink-Daten umfasst
Übertragen einer ersten Anzahl von Wiederholungen von redundanten Versionen der Uplink-Daten in dem ersten Abdeckungszeitraum ab dem Startzeitpunkt bis zu einem Umschaltzeitraum zwischen dem ersten Abdeckungszeitraum und dem zweiten Abdeckungszeitraum und einer zweiten Anzahl von Wiederholungen von redundanten Versionen der Uplink-Daten aus dem Umschaltzeitraum in dem zweiten Abdeckungszeitraum.

**12.** Verfahren nach Anspruch 1, wobei das Übertragen der Uplink-Daten umfasst
Übertragen der Uplink-Daten in mindestens einem Teil des zweiten Abdeckungszeitraums gemäß Medienzugriffssteuerungselementen, die von der drahtlosen Zugriffsschnittstelle zum Übertragen der Uplink-Daten in dem ersten Abdeckungszeitraum empfangen wurden.

**13.** Verfahren zum Betreiben einer nicht-terrestrischen Netzwerk-Infrastrukturausrüstung, NTN-Infrastrukturausrüstung, eines drahtlosen Kommunikationsnetzwerks zum Übertragen von Daten an oder Empfangen von Daten von einer oder mehreren Kommunikationsvorrichtungen, das Verfahren umfassend:

Planen, durch die NTN-Infrastrukturausrüstung, einer Kommunikationsvorrichtung (306) während einer ersten Abdeckungsperiode, um Signale an die NTN-Infrastrukturausrüstung zu übertragen oder von dieser zu empfangen, wobei die NTN-Infrastrukturausrüstung entweder durch ein Luftfahrzeug getragen wird oder die übertragenen oder empfangenen Signale über das Luftfahrzeug an die NTN-Infrastrukturausrüstung oder von dieser weitergeleitet werden, wenn das Luftfahrzeug die Kommunikationsvorrichtung überfliegt, und entweder
Empfangen von Uplink-Daten durch Anpassen eines Empfangs der Uplink-Daten, um mindestens einen Teil eines zweiten Abdeckungszeitraums einzuschließen, basierend auf einer Zeitdauer, die erforderlich ist, um die Uplink-Daten zu übertragen, und einer Startzeit, zu der die Uplink-Daten in dem ersten Abdeckungszeitraum in Bezug auf ein Ende des ersten Abdeckungszeitraums übertragen werden können, wobei der zweite Abdeckungszeitraum ein Zeitraum ist, währenddessen die Kommunikationsvorrichtung Signale an die NTN-Infrastrukturausrüstung übertragen oder von dieser empfangen kann, oder
Übertragen von Downlink-Daten von dem drahtlosen Kommunikationsnetzwerk an die Kommunikationsvorrichtung, durch Anpassen einer Übertragung der Downlink-Daten, um mindestens einen Teil des zweiten Abdeckungszeitraums einzuschließen, wobei diese mindestens teilweise in dem zweiten Abdeckungszeitraum übertragen wurden, basierend auf einer Zeitdauer, die erforderlich ist, um die Downlink-Daten zu übertragen, und einer Startzeit, zu der die Downlink-Daten in dem ersten Abdeckungszeitraum in Bezug auf ein Ende des ersten Abdeckungszeitraums übertragen werden können.

**14.** Kommunikationsvorrichtung (306) zum Übertragen oder Empfangen über ein drahtloses Kommunikationsnetzwerk, wobei das drahtlose Kommunikationsnetzwerk eine nicht-terrestrische Infrastrukturausrüstung, NTN-Infrastrukturausrüstung, umfasst, die Kommunikationsvorrichtung umfassend

eine Transceiver-Schaltlogik, die konfiguriert ist, um Signale an die NTN-Infrastrukturausrüstung zu übertragen oder von dieser zu empfangen, und
eine Steuerungsschaltlogik, die konfiguriert ist zum

Identifizieren eines ersten Abdeckungszeitraums, währenddessen die Kommunikationsvorrichtung Signale an eine erste NTN-Infrastrukturausrüstung übertragen oder von dieser empfangen kann, wobei die erste NTN-Infrastrukturausrüstung entweder durch ein erstes Luftfahrzeug (310) getragen wird oder die übertragenen oder empfangenen Signale über das erste Luftfahrzeug an die erste NTN-Infrastrukturausrüstung oder von dieser weitergeleitet werden, wenn das erste Luftfahrzeug die Kommunikationsvorrichtung überfliegt,
Identifizieren eines zweiten Abdeckungszeitraums, währenddessen die Kommunikationsvorrichtung Signale an die erste NTN-Infrastrukturausrüstung oder eine zweite NTN-Infrastrukturausrüstung übertragen oder von dieser empfangen kann, wobei die zweite NTN-Infrastrukturausrüstung entweder durch ein zweites Luftfahrzeug (360) getragen wird oder die übertragenen oder empfangenen Signale über das zweite Luftfahrzeug an die zweite NTN-Infrastrukturausrüstung oder von dieser weitergeleitet werden, wenn das zweite Luftfahrzeug über die Kommunikationsvorrichtung überfliegt, und entweder
Steuern der Transceiver-Schaltlogik, um Uplink-Daten an das drahtlose Kommunikationsnetzwerk zu übertragen, durch Anpassen einer Übertragung der Uplink-Daten, um mindestens einen Teil des zweiten Abdeckungszeitraums einzuschließen, basierend auf einer Zeitdauer, die erforderlich ist, um die Uplink-Daten zu übertragen, und einer Startzeit, zu der die Uplink-Daten in dem ersten Abdeckungszeitraum in Bezug auf ein Ende des ersten Abdeckungszeitraums übertragen werden können, oder
Steuern der Transceiver-Schaltlogik, um Downlink-Daten von dem drahtlosen Kommunikationsnetzwerk zu empfangen, durch Anpassen eines Empfangs der Downlink-Daten, um mindestens einen Teil des zweiten Abdeckungszeitraums einzuschließen, wobei diese mindestens teilweise in dem zweiten Abdeckungszeitraum übertragen wurden, basierend auf einer Zeitdauer, die erforderlich ist, um die Downlink-Daten zu empfangen, und einer Startzeit, zu der die Downlink-Daten in dem ersten Abdeckungszeitraum in Bezug auf ein Ende des ersten Abdeckungszeitraums empfangen werden können.

**15.** Nicht-terrestrische Netzwerk-Infrastrukturausrüstung, NTN-Infrastrukturausrüstung, zum Ausbilden eines Teils eines drahtlosen Kommunikationsnetzwerks zum Übertragen von Daten an oder Empfangen von Daten von einer oder mehreren Kommunikationsvorrichtungen, die NTN-Infrastrukturausrüstung umfassend:

Transceiver-Schaltlogik, die konfiguriert ist, um Signale an die eine oder mehrere Kommunikationsvorrichtungen zu übertragen oder von diesen zu empfangen, und
eine Steuerungsschaltlogik, die konfiguriert ist zum
Planen einer Kommunikationsvorrichtung (306) während eines ersten Abdeckungszeitraums, um Signale an die NTN-Infrastrukturausrüstung zu übertragen oder von dieser zu empfangen, wobei die NTN-Infrastrukturausrüstung entweder durch ein Luftfahrzeug getragen wird oder die übertragenen oder empfangenen Signale über das Luftfahrzeug an die NTN-Infrastrukturausrüstung oder von dieser weitergeleitet werden, wenn das Luftfahrzeug die Kommunikationsvorrichtung überfliegt, und entweder
Steuern der Transceiver-Schaltung, um Uplink-Daten zu empfangen, durch Anpassen eines Empfangs der Uplink-Daten, um mindestens einen Teil eines zweiten Abdeckungszeitraums einzuschließen, basierend auf einer Zeitdauer, die erforderlich ist, um die Uplink-Daten zu übertragen, und einer Startzeit, zu der die Uplink-Daten in dem ersten Abdeckungszeitraum in Bezug auf ein Ende des ersten Abdeckungszeitraums übertragen werden können, wobei der zweite Abdeckungszeitraum ein Zeitraum ist, währenddessen die Kommunikationsvorrichtung Signale an die NTN-Infrastrukturausrüstung übertragen oder von dieser empfangen kann, oder
Steuern der Transceiver-Schaltlogik, um Downlink-Daten von dem drahtlosen Kommunikationsnetzwerk an die Netzwerkvorrichtung zu übertragen, durch Anpassen einer Übertragung der Downlink-Daten, um mindestens einen Teil des zweiten Abdeckungszeitraums einzuschließen, wobei diese mindestens teilweise in dem zweiten Abdeckungszeitraum übertragen wurden, basierend auf einer Zeitdauer, die erforderlich ist, um die Downlink-Daten zu übertragen, und einer Startzeit, zu der die Downlink-Daten in dem ersten Abdeckungszeitraum in Bezug auf ein Ende des ersten Abdeckungszeitraums übertragen werden können.

## Revendications

1. Procédé d'exploitation d'un dispositif de communication (306) permettant de transmettre ou de recevoir par l'intermédiaire d'un réseau de communication sans fil, qui comporte un équipement d'infrastructure non terrestre, NTN, le procédé comprenant :

l'identification, par le dispositif de communication, d'une première période de couverture pendant laquelle le dispositif de communication peut transmettre des signaux à ou recevoir des signaux d'un premier équipement d'infrastructure NTN, le premier équipement d'infrastructure NTN étant porté par un premier véhicule aérien (310) ou les signaux transmis ou reçus sont relayés par le premier véhicule aérien vers ou depuis le premier équipement d'infrastructure NTN, à mesure que le premier véhicule aérien passe au-dessus du dispositif de communication,
l'identification, par le dispositif de communication, d'une seconde période de couverture pendant laquelle le dispositif de communication peut transmettre des signaux à ou recevoir des signaux du premier équipement d'infrastructure NTN ou d'un second équipement d'infrastructure NTN, le second équipement d'infrastructure NTN étant porté par un second véhicule aérien (360) ou les signaux transmis ou reçus sont relayés par le second véhicule aérien vers ou depuis le second équipement d'infrastructure NTN à mesure que le second véhicule aérien passe au-dessus du dispositif de communication, et
la transmission de données de liaison montante au réseau de communication sans fil en adaptant une transmission des données de liaison montante pour comporter au moins une partie de la seconde période de couverture, en fonction d'une durée nécessaire pour transmettre les données de liaison montante et d'une heure de début à laquelle les données de liaison montante peuvent être transmises dans la première période de couverture par rapport à une fin de la première période de couverture, ou
la réception de données de liaison descendante depuis le réseau de communication sans fil en adaptant une réception des données de liaison descendante pour comporter au moins une partie de la seconde période de couverture, ayant été transmises au moins en partie dans la seconde période de couverture, en fonction d'une durée nécessaire pour recevoir les données de liaison descendante et d'une heure de début à laquelle les données de liaison descendante peuvent être reçues dans la première période de couverture par rapport à une fin de la première période de couverture.

2. Procédé selon la revendication 1, dans lequel l'adaptation de la transmission des données de liaison montante pour comporter au moins une partie de la seconde période de couverture comprend

le fait d'identifier que l'heure de début à laquelle les données de liaison montante peuvent être transmises se situe pendant la première période de couverture, et
la transmission des données de liaison montante dans une partie de la première période de couverture et de l'au moins une partie de la seconde période de couverture, ou
le report de la transmission des données de la liaison montante pour qu'elle commence dans l'au moins une partie de la seconde période de couverture.

3. Procédé selon la revendication 2, dans lequel le fait d'identifier que l'heure de début à laquelle les données de liaison montante peuvent être transmises pendant la première période de couverture comprend
la programmation de la transmission des données de liaison montante pendant la première période de couverture.

4. Procédé selon la revendication 2, dans lequel la programmation de la transmission des données de liaison montante pendant la première période de couverture comprend
la réception d'informations de commande de liaison descendante depuis le réseau de communication sans fil programmant la transmission des données de liaison montante, les informations de commande de liaison descendante étant reçues pendant la première période de couverture.

5. Procédé selon la revendication 4, dans lequel les informations de commande de liaison descendante reçues dans la première période de couverture identifient des ressources temporelles et fréquentielles de l'au moins une partie de la seconde période de couverture.

6. Procédé selon la revendication 4, dans lequel la programmation de la transmission des données de liaison montante pendant la première période de couverture comprend

la détection, par des circuits émetteur-récepteur du dispositif de communication, de la présence des données de liaison montante dans une mémoire tampon d'entrée pour transmission par le dispositif de communication,

la transmission d'une indication d'un état de la mémoire tampon au réseau de communication sans fil, et

en réponse, la réception des informations de commande de liaison descendante programmant la transmission des données de liaison montante.

7. Procédé selon la revendication 3, dans lequel la transmission des données de liaison montante comprend

la transmission des données de liaison montante en tant qu'une pluralité de répétitions d'une version redondante d'un bloc de transport, le nombre de la pluralité de répétitions du bloc de transport déterminant la durée nécessaire à la transmission des données de liaison montante, un certain nombre de la pluralité de versions redondantes étant transmises dans la première période de couverture et un second nombre de versions redondantes étant transmises dans la seconde période de couverture.

8. Procédé selon l'une quelconque des revendications 1, dans lequel la transmission des données de liaison montante comprend

la transmission des données de liaison montante en tant qu'une pluralité de répétitions d'une version redondante d'un bloc de transport, le nombre de la pluralité de répétitions du bloc de transport déterminant la durée nécessaire à la transmission des données de liaison montante, et les informations de commande de liaison descendante indiquant un nombre de la pluralité de versions redondantes à transmettre dans la première période de couverture, et le procédé comprend

la détermination d'un second nombre de versions redondantes à transmettre dans la seconde période de couverture.

9. Procédé selon la revendication 8, dans lequel la détermination du second nombre des versions redondantes à transmettre dans la seconde période de couverture comprend la détermination d'un nombre restant de versions redondantes après que le premier nombre de versions redondantes a été transmis à partir de l'heure de début à laquelle les données de liaison montante peuvent être transmises dans la première période de couverture.

10. Procédé selon la revendication 8, dans lequel la détermination du second nombre des versions redondantes à transmettre dans la seconde période de couverture comprend

la réception de secondes informations de commande de liaison descendante indiquant le second nombre de versions redondantes.

11. Procédé selon la revendication 8, dans lequel la transmission des données de liaison montante comprend

la transmission d'un premier nombre de répétitions de versions redondantes des données de liaison montante dans la première période de couverture entre l'heure de début et une période de commutation entre la première période de couverture et la seconde période de couverture, et un second nombre de répétitions de versions redondantes des données de liaison montante de la période de commutation dans la seconde période de couverture.

12. Procédé selon la revendication 1, dans lequel la transmission des données de liaison montante comprend

la transmission des données de liaison montante dans au moins une partie de la seconde période de couverture conformément aux éléments de commande d'accès au support qui ont été reçus depuis l'interface d'accès sans fil pour la transmission des données de liaison montante dans la première période de couverture.

13. Procédé d'exploitation d'un équipement d'infrastructure de réseau non terrestre, NTN, d'un réseau de communication sans fil pour la transmission de données à ou la réception de données d'un ou plusieurs dispositifs de communication, le procédé comprenant :

la programmation, par l'équipement d'infrastructure NTN, d'un dispositif de communication (306) pendant une première période de couverture pour transmettre des signaux à ou recevoir des signaux de l'équipement d'infrastructure NTN, l'équipement d'infrastructure NTN étant porté par un véhicule aérien ou les signaux transmis ou reçus sont relayés par le véhicule aérien vers ou depuis l'équipement d'infrastructure NTN à mesure que le véhicule aérien passe au-dessus du dispositif de communication, et

la réception de données de liaison montante en adaptant une réception des données de liaison montante pour comporter au moins une partie d'une seconde période de couverture, en fonction d'une durée nécessaire pour transmettre les données de liaison montante et d'une heure de début à laquelle les données de liaison montante peuvent être transmises dans la première période de couverture par rapport à une fin de la première période de couverture, la seconde période de couverture étant une période pendant laquelle le dispositif de communication peut transmettre des signaux à ou recevoir des signaux de l'équipement d'infrastructure NTN, ou

la transmission de données de liaison descendante depuis le réseau de communication sans fil au dispositif de communication en adaptant une transmission des données de liaison descendante pour comporter au moins une partie de la seconde période de couverture, ayant été transmises au moins en partie dans la seconde période de couverture, en fonction d'une durée nécessaire pour transmettre les données de liaison descendante et d'une heure de début à laquelle les données de liaison descendante peuvent être transmises dans la première période de couverture par rapport à une fin de la première période de couverture.

14. Dispositif de communication (306) pour la transmission ou la réception par l'intermédiaire d'un réseau de communication sans fil, le réseau de communication sans fil comportant un équipement d'infrastructure non terrestre, NTN, le dispositif de communication comprenant

des circuits émetteur-récepteur configurés pour transmettre des signaux à ou recevoir des signaux de l'équipement d'infrastructure NTN, et des circuits de commande configurés
pour identifier une première période de couverture pendant laquelle le dispositif de communication peut transmettre des signaux à ou recevoir des signaux d'un premier équipement d'infrastructure NTN, le premier équipement d'infrastructure NTN étant porté par un premier véhicule aérien (310) ou les signaux transmis ou reçus sont relayés par le premier véhicule aérien vers ou depuis le premier équipement d'infrastructure NTN, à mesure que le premier véhicule aérien passe au-dessus du dispositif de communication,
pour identifier une seconde période de couverture pendant laquelle le dispositif de communication peut transmettre des signaux à ou recevoir des signaux du premier équipement d'infrastructure NTN ou d'un second équipement d'infrastructure NTN, le second équipement d'infrastructure NTN étant porté par un second véhicule aérien (360) ou les signaux transmis ou reçus sont relayés par le second véhicule aérien vers ou depuis le second équipement d'infrastructure NTN à mesure que le second véhicule aérien passe au-dessus du dispositif de communication, et
pour commander les circuits émetteur-récepteur pour transmettre des données de liaison montante au réseau de communication sans fil en adaptant une transmission des données de liaison montante pour comporter au moins une partie de la seconde période de couverture, en fonction d'une durée nécessaire pour transmettre les données de liaison montante et d'une heure de début à laquelle les données de liaison montante peuvent être transmises dans la première période de couverture par rapport à une fin de la première période de couverture, ou
pour commander les circuits émetteur-récepteur pour recevoir des données de liaison descendante depuis le réseau de communication sans fil en adaptant une réception des données de liaison descendante pour comporter au moins une partie de la seconde période de couverture, ayant été transmises au moins en partie dans la seconde période de couverture, en fonction d'une durée nécessaire pour recevoir les données de liaison descendante et d'une heure de début à laquelle les données de liaison descendante peuvent être reçues dans la première période de couverture par rapport à une fin de la première période de couverture.

15. Équipement d'infrastructure de réseau non terrestre, NTN, pour faire partie d'un réseau de communication sans fil pour la transmission de données à ou la réception de données d'un ou plusieurs dispositifs de communication, l'équipement d'infrastructure NTN comprenant :

des circuits émetteur-récepteur configurés pour transmettre des signaux à ou recevoir des signaux du ou des dispositifs de communication, et
des circuits de commande configurés
pour programmer un dispositif de communication (306) pendant une première période de couverture pour transmettre des signaux à ou recevoir des signaux de l'équipement d'infrastructure NTN, l'équipement d'infrastructure NTN étant porté par un véhicule aérien ou les signaux transmis ou reçus sont relayés par le véhicule aérien vers ou depuis l'équipement d'infrastructure NTN à mesure que le véhicule aérien passe au-dessus du dispositif de communication, ou
pour commander les circuits émetteur-récepteur pour recevoir des données de liaison montante en adaptant une réception des données de liaison montante pour comporter au moins une partie d'une seconde période de couverture, en fonction d'une durée nécessaire pour transmettre les données de liaison montante et d'une heure de début à laquelle les données de liaison montante peuvent être transmises dans la première période de couverture par rapport à une fin de la première période de couverture, la seconde période de couverture étant une période pendant laquelle le dispositif de communication peut transmettre des signaux à ou recevoir des signaux de l'équipement d'infrastructure **NTN, ou**

pour commander les circuits émetteur-récepteur pour transmettre des données de liaison descendante depuis le réseau de communication sans fil au dispositif de communication en adaptant une transmission des données de liaison descendante pour comporter au moins une partie de la seconde période de couverture, ayant été transmises au moins partiellement dans la seconde période de couverture, en fonction d'une durée nécessaire pour transmettre les données de liaison descendante et d'une heure de début à laquelle les données de liaison descendante peuvent être transmises dans la première période de couverture par rapport à une fin de la première période de couverture.

FIG. 1

FIG. 2

FIG. 3

FIG. 4

EP 4 315 656 B1

FIG. 5

FIG. 6

FIG. 7A

FIG. 7B

EP 4 315 656 B1

FIG. 8

FIG. 9

FIG. 10

EP 4 315 656 B1

UE in footprint of first beam
702
6.1 sec

Bit in DCI indicating the
allocation is in the new cell

1002 ~ 1030

MPDCCH

710

UE in footprint of second beam
802
6.1 sec

712

4.096 sec
1022

PUSCH B
1006

818 916

926 928

Transition time from first beam

Transition time into second beam

FIG. 11

*Scheduler decides to schedule PUSCH in beam B*

*UE in footprint of first beam*

*UE in footprint of second beam*

702

6.1 sec

*Scheduler determines that there is not enough time to transmit PUSCH in beam A*

802

6.1 sec

712

4.096 sec

1104

*MPDCCH* 1106

*PUSCH B* 1108

1102

818 916

710

928

*UL data arrives in buffers*

926

*Transition time from first beam*

*Transition time into second beam*

FIG. 12

UE in footprint of first beam

UE in footprint of second beam

702

6.1 sec

Initial transmission (1536 REP)

1204

1206

712

6.1 sec

Re-transmission (2560 REP)

1208

1202

MPDCCH

Nominal length of transmission
= 4096 repetitions

818

916

926

928

Transition time from first beam

Transition time into second beam

FIG. 13

EP 4 315 656 B1

FIG. 14

EP 4 315 656 B1

308

| 4(n-1) | 4(n-1)+1 | 4(n-1)+2 | 4(n-1)+3 | 4n | 4n+1 | 4n+2 | 4n+3 | 4(n+1) | 4(n+1)+1 | 4(n+1)+2 | 4(n+1)+3 |

Cell 1 | 348 | Cell 2

Batch n-1 | Batch n | Batch n+1

**FIG. 15A**

308

| 4(n-1) | 4(n-1)+1 | 4(n-1)+2 | 4(n-1)+3 |

Delay

| 4n | 4n+1 | 4n+2 | 4n+3 | 4(n+1) | 4(n+1)+1 | 4(n+1)+2 | 4(n+1)+3 |

Cell 1 | 348 | Cell 2

Batch n-1 | Batch n | Batch n+1

**FIG. 15B**

308

| 4(n-1) | 4(n-1)+1 | 4(n-1)+2 | 4(n-1)+3 |

Restart Batch n

| 4n | 4n+1 | 4n+2 | 4n+3 | 4(n+1) | 4(n+1)+1 | 4(n+1)+2 | 4(n+1)+3 |

Cell 1 | 348 | Cell 2

Batch n-1 | Batch n | Batch n+1

**FIG. 15C**

FIG. 15D

**EP 4 315 656 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 21166488

- WO 2020231831 A1, APPLE INC [US]

**Non-patent literature cited in the description**

- Study on New Radio (NR) to support non terrestrial networks (Release 15). *Generation Partnership Project*, December 2017
- **HOLMA H ; TOSKALA A**. LTE for UMTS OFDMA and SC-FDMA based radio access. John Wiley and Sons, 2009

- Solutions for NR to support non-terrestrial networks (NTN) (Release 16). *Generation Partnership Project*